(19) Europäisches Patentamt
European Patent Office
Office européen des brevets

(11) EP 2 906 972 B1

(12) **EUROPEAN PATENT SPECIFICATION**

(45) Date of publication and mention of the grant of the patent:
**05.07.2017 Bulletin 2017/27**

(21) Application number: **13814650.1**

(22) Date of filing: **22.11.2013**

(51) Int Cl.:
***G02B 1/11*** *(2015.01)* ***G02B 1/04*** *(2006.01)*
***C08L 33/24*** *(2006.01)*

(86) International application number:
**PCT/JP2013/082112**

(87) International publication number:
**WO 2014/084328 (05.06.2014 Gazette 2014/23)**

(54) **OPTICAL MEMBER COMPRISING A LAMINATED BODY WITH POLYMER LAYER CONTAINING A MALEIMIDE COPOLYMER AND METHOD FOR MANUFACTURING THE SAME**

OPTISCHES ELEMENT UMFASSEND EINEN LAMINIERTEN KÖRPER, DER EINE MALEIMIDCOPOLYMER ENTHALTENDE POLYMERSCHICHT AUFWEIST UND SEIN HERSTELLUNGSVERFAHREN

ÉLÉMENT OPTIQUE COMPRENANT UN CORPS LAMINE AYANT UNE COUCHE DE POLYMERE QUI CONTIENT UN COPOLYMERE DE MALEIMIDE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2012 JP 2012263125**

(43) Date of publication of application:
**19.08.2015 Bulletin 2015/34**

(73) Proprietor: **Canon Kabushiki Kaisha**
**Tokyo, 146-8501 (JP)**

(72) Inventors:
- **NAKAYAMA, Tomonari**
**Tokyo 146-8501 (JP)**
- **MAKINO, Kenji**
**Tokyo 146-8501 (JP)**

(74) Representative: **WESER & Kollegen**
**Radeckestraße 43**
**81245 München (DE)**

(56) References cited:
**WO-A1-2011/105614 JP-A- 2012 128 168**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 906 972 B1

## Description

### Technical Field

The present invention relates to an optical member having antireflection performance and a method for manufacturing the same and specifically relates to an optical member showing high antireflection performance in a range of a visible region to a near infrared region and a method for manufacturing the same.

### Background Art

As an antireflection film of the optical member, a method for growing boehmite on a base material to obtain an antireflection effect is known. Non-patent literature 1 discloses an antireflection film on a top layer of which a fine periodic structure containing crystals of boehmite and the like is formed by subjecting an aluminum oxide film formed by a liquid phase method (sol-gel method) to steam treatment or immersion treatment in warm water.

When the refractive index of the base material is high, a sufficient antireflection effect cannot be obtained only with the fine periodic structure containing crystals of aluminum oxide. Therefore, a method for increasing the antireflection effect by providing an intermediate layer having a refractive index intermediate between the refractive index of the base material and the refractive index of the antireflection film between the base material and the antireflection film was found. Patent Literature 1 discloses an optical member having an intermediate layer containing an organic resin having an aromatic ring or an imide ring between an antireflection film and a base material. The intermediate layer disclosed in Patent Literature 1 has an effect of protecting a glass base material from damages caused by moisture and vapor in addition to the antireflection effect. Also in the case of a glass base material with a low refractive index, the intermediate layer protecting the base material from damages caused by moisture and vapor and also having the antireflection effect has been demanded. However, since the refractive index of the organic resin having an aromatic ring or an imide ring is high, a higher antireflection effect has been demanded. Patent Literature 2 discloses an intermediate layer having an inorganic skeleton as the intermediate layer of the antireflection film having the antireflection effect also in the glass base material with a low refractive index.

Patent Literature 3 discloses an antireflection film that includes an easy-adhering layer formed on a light-transmitting substrate formed of a PET resin, and an antireflection layer. The easy-adhering layer has an average refractive index between a refractive index of the light-transmitting substrate and a refractive index of the antireflection layer, and the antireflection layer includes a base portion formed on the easy-adhering layer, wherein fine recesses and projections are formed on the base portion in a concavo-convex pattern.


PTL 1 Japanese Patent Laid-Open No. 2008-233880

PTL 2 Japanese Patent Laid-Open No. 2010-256871

PTL 3 Japanese Patent Laid-Open No.2012-128168


### Non Patent Literature

NPL 1 K. Tadanaga, N. Katata, and T. Minami: "Super-Water-Repellent Al2O3 Coating Films with High Transparency" J. Am. Ceram. Soc. and 80 [4] 1040-42 (1997)


### Summary of Invention

### Technical Problem

However, the antireflection film in which an material having an inorganic skeleton is provided on the intermediate layer has required a high temperature for curing and therefore has had a problem in that optical property unevenness caused by poor curing is likely to occur on a base material whose thickness is not uniform as in a lens.

The present invention has been made in view of such a former technique and aims at providing an optical member having good optical properties of showing an antireflection effect even when glass with a low refractive index is used for a base material and a method for manufacturing the same.

### Solution to Problem

In order to achieve the purpose, the present invention relates to an optical member as defined in claim 1.

The present invention also relates to a method for manufacturing an optical member as defined in claim 7. The other claims relate to further developments.

### Advantageous Effects of Invention

The present invention can provide an optical member having high antireflection effect also on a base material with a low refractive index.

### Brief Description of Drawings

Fig. 1 is a schematic view illustrating one embodiment of an optical member of the invention.
Fig. 2 is a schematic view illustrating one embodiment of an optical member of the invention.
Fig. 3 is a schematic view showing a refractive index distribution of one embodiment of the optical member of the invention.
Fig. 4 is a schematic view illustrating one embodiment of the optical member of the invention.
Fig. 5 is a schematic view illustrating one embodiment of the optical member of the invention.
Fig. 6 is a graph showing the infrared absorption spectrum of a maleimide copolymer 1 of Example 1.
Fig. 7 is a graph showing the infrared absorption spectrum of a maleimide copolymer 4 of Example 4.
Fig. 8 is a graph showing the infrared absorption spectrum of a maleimide copolymer 5 of Example 5.
Fig. 9 is a graph showing the infrared absorption spectrum of maleimide homopolymers of Comparative Examples 2 and 5.
Fig. 10 is a graph showing the infrared absorption spectrum of the fluorine-containing polymethacrylate of Example 1.
Fig. 11 is a graph showing the absolute reflectance on the surface of a glass substrate of Example 1.
Fig. 12 is a graph showing the absolute reflectance of the surface of a glass substrate of Example 6.

### Description of Embodiments

Hereinafter, the invention is described in detail.

(Optical Member)

Fig. 1 is a schematic cross sectional view illustrating an optical member according to a first embodiment of the invention. In the first embodiment, a porous layer is used for the surface of a laminated body. In Fig. 1, the optical member of the invention has a laminated body in which a polymer layer 2 containing a maleimide copolymer and a porous layer 3 are laminated in this order on the surface of a base material 1.

Due to the fact that the optical member of the invention has at least one polymer layer 2 having a maleimide copolymer between the base material 1 and the porous layer 3, the optical member of the invention is imparted with a high antireflection effect as compared with the case where the porous layer 3 is directly formed on the base material 1. The thickness of the polymer layer 2 having a maleimide copolymer is 10 nm or more and 150 nm or less and can be varied in this range according to the refractive index and the like of the base material. When the film thickness is less than 10 nm, the antireflection effect is the same as that of the case where the polymer layer 2 is not provided. When the film thickness exceeds 150 nm, the antireflection effect noticeably decreases.

The optical member of the invention has a polymer layer having a maleimide copolymer for the polymer layer 2. In the maleimide polymer, the orientation of imide rings demonstrates a high effect in the formation of a thin film but increases the refractive index. Therefore, the refractive index of the maleimide homopolymer which is an addition polymer of only maleimide is about 1.51 to 1.52 which is not so different from that of general aliphatic polyimides. On the other hand, poly(meth)acrylate, polyallylether, and the like are excellent in processability, have a low refractive index, and are applied to various optical materials. However, these substances have low solvent resistance and thus are unsuitable for use in a laminated body which is formed by repeated application thereof. In poly(meth)acrylate, an ester bond is likely to hydrolyze, and therefore poly(meth)acrylate is difficult to be applied to a thin film which is exposed to a high temperature and high humidity environment or suffers from elution of components from a glass base material. Due to the fact that maleimide is copolymerized with other monomers, a thin film of a maleimide copolymer in which the features of a maleimide polymer are maintained and which also has excellent solvent resistance can be formed. Moreover, a low refractive index can also be realized. Thus, when a maleimide copolymer is used for the polymer layer 2, an optical member which has a low refractive index and in which the reflectance hardly changes under a high temperature and high humidity environment can be formed.

In the maleimide copolymer, the maleimide copolymerization ratio is preferably 0.5 or more and 0.97 or less. When the maleimide copolymerization ratio is less than 0.5, the reflectance fluctuation under a high temperature and high humidity environment becomes large. When the maleimide copolymerization ratio exceeds 0.97, a film with a low refractive index cannot be obtained. In the maleimide copolymer, the maleimide copolymerization ratio is more preferably 0.5 or more and less than 0.8.

The maleimide copolymer is suitably a copolymer having a maleimide unit represented by the following general formula (1) and a (meth)acrylate unit represented by the following general formula (2).

[Chem. 1]

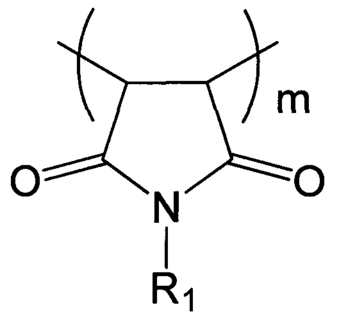

(1)

(In Chemical Formula 1, R1 is a linear, branched, or cyclic alkyl group or alkenyl group having 1 to 8 carbon atoms which is not substituted or substituted with a phenyl group, a hydroxyl group, an alkoxyl group, an acetoxyl group, a cyclic ether group, an amino group, an alkoxysilyl group, or a halogen atom. m is an integer of 1 or more.)

[Chem. 2]

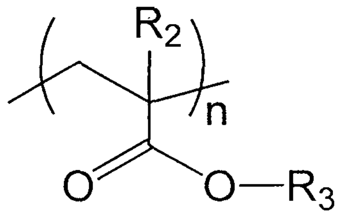

(2)

(In Chemical Formula 2, R2 is hydrogen or a methyl group and R3 is a linear, branched, or cyclic alkyl group or alkenyl group having 1 to 8 carbon atoms which is not substituted or substituted with a hydroxyl group, an alkoxyl group, an acetoxyl group, a cyclic ether group, an amino group, an alkoxysilyl group, or a halogen atom. n is an integer of 1 or more.)

The molecular weight of the maleimide copolymer of the invention is preferably 3,000 or more and 100,000 or less in terms of number average molecular weight. When the number average molecular weight is less than 3,000, the film strength is sometimes insufficient. When the number average molecular weight exceeds 100,000, the viscosity when formed into a solution is excessively high, and thus it is not suitable for thin film formation. The number average molecular weight of the maleimide copolymer is more preferably 5,000 or more and 50,000 or less.

The refractive index of the polymer layer 2 is preferably 1.43 or more and less than 1.5. When the refractive index is less than 1.43, the film density is low and the film strength is insufficient, so that cracking may occur. When the refractive index is 1.5 or more, sufficient antireflection performance is difficult to achieve when combined with a glass base material with a low refractive index.

In the porous layer 3 formed on the polymer layer 2 of the invention, the refractive index is preferably 1.4 or less. The polymer layer 2 can contain a metal oxide, a metal halide, a fluorine-containing polymer, and the like in order to reduce the refractive index. As a layer having a porous layer, a film in which fine particles of silicon oxide or magnesium fluoride are deposited can be used. The fine particles also include hollow particles. Among the above, it is suitable to use a layer in which fine particles of silicon oxide are deposited.

The refractive index of the base material of the invention is preferably 1.45 or more and 1.7 or less and more preferably 1.5 or more and 1.7 or less.

When the refractive index of the base material is set to nb, the refractive index of the polymer layer is set to ni, and the refractive index of the porous layer is set to ns, it is suitable for the optical member to satisfy nb > ni > ns. When satisfying this condition, the optical member has high antireflection performance.

Fig. 2 is a schematic cross sectional view illustrating an optical member according to a second embodiment of

the invention. According to the second embodiment, an uneven layer is used for the surface of a laminated body. In the second embodiment, the physical properties, conditions, and the like described in the first embodiment can be used, except changing the surface of the laminated body to the uneven layer. In Fig. 2, in the optical member of the invention, a polymer layer 2 and an uneven layer 4 are laminated in this order on the surface of a base material 1. The uneven layer 4 may have projections 5. The projections 5 are suitably formed with crystals containing aluminum oxide as the main component. In this specification, the crystals of aluminum oxide refer to crystals deposited and grown on the top layer of a film containing aluminum oxide as the main component when the film is immersed in warm water, and thus the top layer of the aluminum oxide film is subjected to a peptization action or the like.

The uneven layer 4 is suitably a layer in which the refractive index continuously increases from the top layer side to the base material side. As shown in Fig. 3, the refractive index change to the film thickness can be shown by the straight line as indicated by (a) or the curves as indicated by (b) and (c). Due to the fact that the refractive index continuously increases from the top layer side to the base material side, the reflectance reduction effect is high as compared with the case of laminating layers with a high refractive index in order from the top layer side.

The layer 4 having projections is suitably formed with crystals containing an oxide or a hydroxide of aluminum or a hydrate thereof as the main component. A particularly suitable crystal is boehmite. In this specification, the oxide or the hydroxide of aluminum or the hydrate thereof is referred to as aluminum oxide. In the layer 4 having projections, crystals different in size are arranged at random and the upper end portions form projections 5. Therefore, in order to change the height, the size, and the angle of the projections 5 and the interval of the projections 5, it is necessary to control the deposition and growth of the crystals. The layer 4 having the projections may be divided into the projection 5 and a lower layer. Such a lower layer is suitably a layer containing aluminum oxide singly or 30% by mol or less of any one $ZrO_2$, $SiO_2$, $TiO_2$, ZnO, and MgO in aluminum oxide.

Fig. 4 illustrates the case where the surface of the base material 1 is flat, such as a flat plate, a film, or a sheet. The projections 5 are suitably disposed in such a manner that the average angle of angles θ1 (acute angle) between an inclination direction 6 of the projections 5 and the base material surface is preferably 45° or more and 90° or less and 60° or more and 90° or less to the surface of the base material.

Fig. 5 illustrates the case where the surface of the base material 1 has a two-dimensional or three-dimensional curved surface. The projections 5 are suitably disposed in such a manner that the average angle of angles θ2 between an inclination direction 7 of the projections 5 and a tangent 8 to the surface of the base material is 45° or more and 90° or less and 60° or more and 90° or less. Although the values of the angles θ1 and θ2 may exceed 90° depending on the inclination of the projections 5, the value measured in such a manner that the angle is 90° or less is used in this case.

The layer thickness of the layer 4 having projections is preferably 20 nm or more and 1000 nm or less and more preferably 50 nm or more and 1000 nm or less. When the layer thickness of the layer 4 having the projections is 20 nm or more and 1000 nm or less, the antireflection performance due to the projections 5 is effective, a possibility that the mechanical strength of the projections 5 may be deteriorated disappears, and the manufacturing cost of the projections 5 also becomes advantageous. By setting the layer thickness to be 50 nm or more and 1000 nm or less, the antireflection performance is further increased, and thus such a thickness is more suitable.

The surface density of the unevenness of the invention is also important. The average surface roughness Ra' value obtained by surface expansion of the center line average roughness corresponding thereto is 5 nm or more, more preferably 10 nm or more, and still more preferably 15 nm or more and 100 nm or less and the surface area ratio Sr is 1.1 or more. The surface area ratio Sr is more preferably 1.15 or more and still more preferably 1.2 or more and 3.5 or less.

The surface density of the unevenness can be evaluated using a scanning probe microscopy (SPM). The average surface roughness Ra' value obtained by surface expansion of the center line average roughness Ra of the layer 4 having the projections and the surface area ratio Sr thereof are determined by the SPM observation. More specifically, the average surface roughness Ra' value (nm) is one obtained by applying the center line average roughness Ra defined by JIS B 0601 to the measuring surface, and three-dimensionally extending the same, is expressed as a "Value obtained by averaging the absolute values of the deviations from the reference plane to the designated plane", and is given by the following expression (1).

[Math. 1]

$$Ra' = \frac{1}{S_0} \int_{Y_B}^{Y_T} \int_{X_L}^{X_R} \left| F(X, Y) - Z_0 \right| d_X \quad d_Y \qquad (1)$$

Ra': Average surface roughness value (nm)
$S_0$: Area when the measuring surface is supposed to be ideally flat
$|X_R - X_L| \times |Y_T - Y_B|$, F(X, Y) : Height at the measurement point (X, Y), X: X coordinate, Y: Y coordinate
$X_L$ to $X_R$: X coordinate range of the measuring surface

$Y_B$ to $Y_T$: Y coordinate range of the measuring surface
$Z_0$: Average height in the measuring surface

The surface area ratio Sr is determined by $Sr = S/S_0$ [$S_0$: Area when the measuring surface is ideally flat, S: Surface area of an actual measuring surface]. The surface area of the actual measuring surface is determined as follows. First, it is divided into minute triangles containing three data points (A, B, C) which are the closest to each other, and then the area ΔS of each minute triangle is determined using a vector product. ΔS (ΔABC) = [s(s - AB)] (s - BC) (s - AC)0.5 [AB, BC, and AC are the length of each side, s≡0.5(AB + BC + AC)] is established, and the total ΔS is the surface area S. With respect to the surface density of the projections 5, when the Ra' is 5 nm or more and the Sr is 1.1 or more, the antireflection by the projections 5 can be demonstrated. When the Ra' is 10 nm or more and the Sr is 1.15 or more, the antireflection effect is higher than that in the former case. When the Ra' is 15 nm or more and the Sr is 1.2 or more, the performance which can withstand actual use is obtained. However, when the Ra' is 100 nm or more and the Sr is 3.5 or more, the effect of scattering by the projections 5 is better than the antireflection effect, so that sufficient antireflection performance cannot be obtained.
In the optical member of the invention, a layer for giving various functions can be further provided in addition to the layers described above. For example, in order to increase the film hardness, a hard coat layer can be provided on the layer 4 having the projections or, for the purpose of preventing adhesion of dirt and the like, a water-repellent film layer of fluoroalkylsilane, alkylsilane, or the like can be provided. On the other hand, in order to increase adhesiveness of the base material and a layer containing polyimide as the main component, an adhesive layer and a primer layer can be provided.

(Method for manufacturing optical member)

A method for manufacturing the optical member of the invention includes a process of applying a polymer solution containing a maleimide copolymer onto a base material or a thin film provided on the base material, a process of drying and/or baking the applied polymer solution at 23°C or more and 180°C or less to form a polymer layer containing the maleimide copolymer, and a process of forming a porous layer or a layer having an uneven structure on the polymer layer.
The maleimide copolymer can be synthesized by addition polymerization of maleimide monomers and other monomers in a solution in the presence of a polymerization initiator.
Examples of the maleimide monomers for use in the synthesis of the maleimide copolymer are mentioned below.
Mentioned are N-methyl maleimide, N-ethyl maleimide, N-propyl maleimide, N-isopropyl maleimide, N-butyl maleimide, N-tert-butyl maleimide, N-(1-prenyl)maleimide, N-cyclohexyl maleimide, N-benzyl maleimide, N-(1-phenylethyl)maleimide, N-(2-furylmethyl)maleimide, N-(2-hydroxyethyl)maleimide, N-(2-methoxyethyl)maleimide, N-(2-acetoxyethyl)maleimide, N-(2-aminoethyl)maleimide, N-(2-aminopropyl)maleimide, N-(3-chloropropyl)maleimide, and the like.
These maleimide monomers can be used singly or in combination of two or more kinds thereof. From the viewpoint of the processability, the refractive index, and the tolerance in the formation of a thin film of the polymer, N-methyl maleimide, N-ethyl maleimide, N-propyl maleimide, N-tert-butyl maleimide, N-cyclohexyl maleimide, N-benzyl maleimide, and the like are suitable.
Examples of monomers other than maleimides for use in maleimide copolymers are mentioned below.
Mentioned are acrylates, such as methyl acrylate, ethyl acrylate, vinyl acrylate, allyl acrylate, butyl acrylate, tert-butyl acrylate, isobutyl acrylate, isoamyl acrylate, hexyl acrylate, cyclohexyl acrylate, hydroxyethyl acrylate, 2-hydroxypropyl acrylate, 4-hydroxybutyl acrylate, 2-methoxyethyl acrylate, 2-methoxypropyl acrylate, 2-acetoxyethyl acrylate, tetrahydrofurfuryl acrylate, glycidyl acrylate, 2,2,2-trifluoroethyl acrylate, 1,1,1,3,3,3-hexafluoropropyl acrylate, 2,2,3,3-tetrafluoropropyl acrylate, 3-(acryloyloxy)propyl trimethoxysilane, and 3-(acryloyloxy)propyl triethoxysilane; methacrylates, such as methyl methacrylate, ethyl methacrylate, vinyl methacrylate, allyl methacrylate, butyl methacrylate, tert-butyl methacrylate, isobutyl methacrylate, isoamyl methacrylate, hexyl methacrylate, cyclohexyl methacrylate, hydroxyethyl methacrylate, 2-hydroxypropyl methacrylate, 4-hydroxybutyl methacrylate, 2-methoxyethyl methacrylate, 2-acetoxyethyl methacrylate, 2-methoxypropyl methacrylate, tetrahydrofurfuryl methacrylate, glycidyl methacrylate, 2,2,2-trifluoroethyl methacrylate, 1,1,1,3,3,3-hexafluoropropyl methacrylate, 2,2,3,3-tetrafluoropropyl methacrylate, 3-(methacryloyloxy)propyltrimethoxysilane, and 3-(methacryloyloxy)propyltriethoxysilane; acryl amides, such as acrylamide, N-methylol acrylamide, N-methoxymethyl acrylamide, and N-butoxymethyl acrylamide; vinyl ethers, such as methyl vinyl ether, ethyl vinyl ether, n-propyl vinyl ether, isopropyl vinyl ether, n-butyl vinyl ether, tert-butyl vinyl ether, isobutyl vinyl ether, n-pentyl vinyl ether, n-hexyl vinyl ether, n-octyl vinyl ether, cyclohexyl vinyl ether, 2-hydroxyethyl vinyl ether, and 3-hydroxypropyl vinyl ether; olefins, such as ethylene, isobutene, 1-penten, 1-hexene, 1-octene, diisobutylene, 2-methyl-1-butene, 2-methyl-1-pentene, 2-methyl-1-hexene, 1-methyl 1-heptene, 1-isooctene, 2-methyl-1-octene, 2-ethyl-1-pentene, 2-methyl-2-butene, 2-methyl-2-pentene, and 2-methyl-2-hexene, and the like.
These monomers can be used singly or in combination of two or more kinds thereof. From the viewpoint of

polymerizability, monomers more suitable for copolymerization with maleimide are acrylates and methacrylates. Among the above, further from the viewpoint of the processability, the refractive index, and the adhesiveness of the polymer, methylacrylate, 2,2,2-trifluoroethyl acrylate, 3-(acryloyloxy)propyltrimethoxysilane, methylmethacrylate, 2,2,2-trifluoroethyl methacrylate, and 3-(methacryloyloxy)propyltrimethoxysilane are more suitable.

As the polymerization initiator to be used, radical polymerization initiators are suitable. Examples of the radical initiators are mentioned below. Mentioned are organic peroxides, such as dibenzoyl peroxide, diisobutyroyl peroxide, bis(2,4-dichlorobenzoyl)peroxide, (3,5,5-trimethylhexanoyl)peroxide, dioctanoyl peroxide, dilauroyl peroxide, distearoyl peroxide, hydrogen peroxide, tert-butyl hydroperoxide, cumene hydroperoxide, p-menthane hydroperoxide, diisopropylbenzene hydroperoxide, 1,1,3,3,-tetramethylbutyl hydroperoxide, tert-hexyl hydroperoxide, di-tert-butyl peroxide, dicumyl peroxide, dilauryl peroxide, peroxide, $\alpha,\alpha'$-bis(tert-butylperoxy)diisopropylben, 2,5-dimethyl-2,5-bis(t-butylperoxy)hexane, tert-butylcumyl peroxide, 2,5-dimethyl-2,5-bis(tert-butylperoxy)hexyne, tert-butylperoxy acetate, tert-butylperoxy pivalate, tert-hexylperoxy pivalate, 1,1,3,3-tetramethylbutylperoxy-2-ethyl hexanoate, 2,5-dimethyl-2,5-bis(2-ethylhexanoylperoxy)hexane, 1-cyclohexyl-1-methylethylperoxy-2-ethylhexanoate, tert-hexylperoxy-2-ethylhexanoate, tert-butylperoxy-2-ethylhexanoate, tert-butylperoxy-2-ethylhexanoate, tert-butylperoxy isobutyrate, tert-butylperoxymalate, tert-butylperoxy-3,5,5-trimethyl hexanoate, tert-butylperoxy laurate, 2,5-dimethyl-2,5-bis(m-toluoylperoxy)hexane, $\alpha,\alpha'$-bis(neodecanoyl peroxy)diisopropyl benzene, cumylperoxy neodecanoate, 1,1,3,3,-tetramethylbutyl peroxy neodecanoate, 1-cyclohexyl-1-methylethylperoxy neodecanoate, tert-hexylperoxy neodecanoate, tert-hexylperoxy neododecanoate, tert-butylperoxy benzoate, tert-hexylperoxy benzoate, bis(tert-butylperoxy)isophthalate, 2,5-dimethyl-2,5-bis(benzoylperoxy)hexane, tert-butylperoxy m-toluoyl benzoate, 3,2',4 4'-tetra-(tert-butylperoxy carbonyl)benzophenone, 1,1-bis(tert-hexylperoxy)3,3,5-trimethyl cyclohexane, 1,1-bis(tert-hexylperoxy)cyclohexane, 1,1-bis(tert-butylperoxy) 3,3,5-trimethyl cyclohexane, 1,1-bis(tert-butylperoxy)cyclohexane, 1,1-bis(tert-butylperoxy)cyclododecane, 2,2-bis(tert-butylperoxy)butane, n-butyl 4,4-bis(tert-butylperoxy)valerate, 2,2-bis(4,4-ditert-butylperoxy cyclohexyl)propane, tert-hexylperoxy isopropyl carbonate, tert-butylperoxy isopropyl carbonate, tert-butylperoxy-2-ethyl hexyl carbonate, tert-butylperoxy allyl carbonate, di-n-propylperoxy carbonate, diisopropylperoxy carbonate, bis(4-tert-butyl cyclohexyl)peroxy carbonate, di-2-ethoxyethylperoxy carbonate, di-2-ethylhexylperoxy carbonate, di-2-methoxybutylperoxy carbonate, and di(3-methyl-3-methoxybutyl)peroxy carbonate; azobis radical polymerization initiators, such as azobisisobutyronitrile, azobisisovaleronitrile, 2,2-azobis (4-methoxy-2,4-dimethylvaleronitrile), 2,2-azobis(2,4-dimethylvaleronitrile), 2,2-azobis(2-methylbutyronitrile), 1,1'-azobis(cyclohexane-1-carbonitrile), 2-(carbomoyl azo)isobutyronitrile, 2,2-azobis[2-methyl-N-[1,1bis(hydroxylmethyl)-2-hydroxylethyl]propione amide], 2,2-azobis[2-methyl-N-(2-hydroxylethyl)propione amide], 2,2-azobis[N-(2-propenyl)2-methyl propione amide], 2,2-azobis(N-butyl-2-methyl propione amide), 2,2-azobis(N-cyclohexyl-2-methyl propione amide), 2,2-azobis[2-(5-methyl-2-imidazoline-2-yl)propane]dihydrochloride, 2,2-azobis[2-(2-imidazoline-2-yl)propane]dihydrochloride, 2,2-azobis[2-(2-imidazoline-2-yl) propane]disalphate dihydrate, 2,2-azobis[2-(3,4,5,6-tetrahydropyrimidine-2-yl)propane]dihydrochloride, 2,2-azobis[2-[1-(2-hydroxyethyl)2-imidazoline-2-yl]propane]dihydrochloride, 2,2-azobis[2-(2-imidazoline-2-yl)propane], 2,2-azobis (2-methyl propione amidine)dihydro chloride, 2,2-azobis [N-(2-carboxyethyl)2-methyl propione amidine], 2,2-azobis (2-methyl propioneamidoxime), dimethyl-2,2'azobisbutyrate, 4,4'-azobis(4-cyanopentanoic acid), and 2,2-azobis(2,4,4-trimethylpentane), and the like.

The use amount of these radical polymerization initiators is preferably 0.0001 mol or more and 10 mol or less based on 100 mol in total of all the monomers. When the amount of the radical polymerization initiator is less than 0.0001 mol, the polymerization reaction ratio of monomers decreases, so that the yield decreases. On the other hand, when the amount exceeds 10 mol, the molecular weight of a copolymer becomes small, so that required properties may not be obtained. The use amount is more preferably in the range of 0.001 mol or more and 5 mol or less.

For manufacturing the maleimide copolymer of the invention, a known polymerization method can be employed and a solution polymerization method is suitable. Mentioned as a solvent for use in the solution polymerization method are methanol, isopropyl alcohol, isobutyl alcohol, 1-methoxy-2-propanol, acetone, methyl ethyl ketone, methyl isobutyl ketone, cyclohexanone, ethyl acetate, butyl acetate, ethyl lactate, 1-methoxy-2-acetoxy propane, tetrahydrofuran, dioxane, butyl cellosolve, dimethyl formamide, dimethylsulfoxide, benzene, ethyl benzene, toluene, xylene, cyclohexane, ethyl cyclohexane, acetonitrile, and the like. These solvents can be used singly or in combination of two or more kinds thereof. These solvents may be dehydrated beforehand for use as required.

The solvent amount is preferably 100 parts by weight or more and 600 parts by weight or less based on 100 parts by weight of all the monomers. When the solvent amount is less than 100 parts by weight, the polymer may be deposited or stirring may be difficult due to a rapid increase in viscosity. When the solvent amount exceeds 600 parts by weight, the molecular weight of the copolymer to be obtained may become small.

The polymerization is performed by charging the polymerization raw materials mentioned above into a reaction vessel. In the polymerization, it is suitable to exclude dissolved oxygen out of the reaction system by vacuum degassing, nitrogen replacement, or the like beforehand.

The polymerization temperature or time is to be determined considering the reactivity of the monomers and the initiator. The polymerization temperature is preferably in the range of -50°C or more and 200°C or less and the

polymerization time is preferably in the range of 1 hour or more and 100 hours or less. From the ease of polymerization control and productivity, it is more preferable that the polymerization temperature is in the range of 50°C or more and 100°C or less and the polymerization time is in the range of 1 hour or more and 50 hours or less.

The polymer solution containing the maleimide copolymer is produced by dissolving a polymer containing the maleimide copolymer in a solvent. Mentioned as the solvent are ketones, such as 2-butanone, methyl isobutyl ketone, cyclopentanone, and cyclohexanone; esters, such as ethyl acetate, n-butyl acetate, 1-methoxy-2-acetoxy propane, ethyl lactate, and γ-butyro lactone; ethers, such as tetrahydrofuran, dioxane, diisopropyl ether, dibutyl ether, cyclopentyl methyl ether, and diglyme; and various aromatic hydrocarbons, such as toluene, xylene, and ethyl benzene, chlorinated hydrocarbons, such as chloroform, methylene chloride, and tetrachloroethane; and, in addition thereto, N-methylpyrrolidone, N,N-dimethyl formamide, N,N-dimethyl acetamide, dimethylsulfoxide, sulfolane, and the like. Furthermore, also usable are alcohols, such as ethanol, isopropanol, 1-butanol, 2-butanol, isobutanol, 2-methyl-1-butanol, 2-ethyl-1-butanol, 1-pentanol, 2-pentanol, and 4-methyl-2-pentanol, and ether alcohols, such as methyl cellosolve, ethyl cellosolve, butyl cellosolve, 1-methoxy-2-propanol, and 1-ethoxy-2-propanol.

Into the polymer solution, components other than the maleimide copolymer can be mixed. The amount of the components other than the maleimide copolymer is preferably less than 20 parts by weight based on 100 parts by weight of the maleimide copolymer. When the amount exceeds 20 parts by mass, the transparency, the film strength, and the uniformity of the film thickness are deteriorated. As the components other than the maleimide copolymer, silane coupling agents and phosphate esters for improving adhesiveness can be used. For the purpose of suppressing the coloring in heat treatment, a phenolic antioxidant can also be added. Moreover, for the purpose of improving the solvent resistance of the polymer layer 2, thermocurable or photocurable resin, such as epoxy resin, melamine resin, and acrylic resin, and a crosslinking agent can be mixed. In order to adjust the refractive index and increase the film hardness, a small amount of inorganic particles, such as $SiO_2$, $TiO_2$, $ZrO_2$, $SiO_2$, ZnO, MgO, and $Al_2O_3$, can be mixed.

As a method for applying the polymer solution, known coating methods, such as a dipping method, a spin coating method, a spraying method, a printing method, a flow coating method, and combination thereof, can be adopted as appropriate, for example.

In the process of forming the polymer layer containing the maleimide copolymer, the applied polymer solution is dried and/or baked at 23°C or more and 250°C or less at normal pressure or reduced pressure. The drying and/or baking of the solution containing polyimide is performed mainly for removing the solvent. With respect to the time, heating is suitably performed for about 5 minutes to about 2 hours. A heating method is to be performed by selecting as appropriate a convection oven, a muffle furnace, or irradiation with light, radiation, and electromagnetic waves, such as infrared rays and microwaves.

A method for forming the uneven layer 4 in the invention suitably includes a process of forming a layer containing aluminum oxide as the main component, a process of drying and/or baking an applied aluminum oxide precursor sol at 50°C or more and 250°C or less to form an aluminum oxide film, and a process of immersing the aluminum oxide film in warm water to thereby form a layer having an uneven structure formed with crystals containing aluminum oxide as the main component. The layer containing aluminum oxide as the main component can be formed on the polymer layer 2 by known gas phase methods, such as CVD and PVD, liquid phase methods, such as a sol-gel method, a hydrothermal synthesis method using inorganic salt, and the like. From the respect that a uniform antireflection layer can be formed on a base material of a large area and a nonplanar shape, a method for treating a gel film formed by applying an aluminum oxide precursor sol containing aluminum oxide with warm water, and then growing the aluminum oxide crystals in the shape of a projection is suitable.

For the raw materials of the gel film obtained from the aluminum oxide precursor sol, an aluminum compound or at least one compound of compounds of each of Zr, Si, Ti, Zn, and Mg is used with an aluminum compound. As the raw materials of $Al_2O_3$, $ZrO_2$, $SiO_2$, $TiO_2$, ZnO, and MgO, each metal alkoxide and salt compounds, such as chloride and nitrate, can be used. From the viewpoint of film formability, it is particularly suitable to use metal alkoxide as the $ZrO_2$, $SiO_2$, and $TiO_2$ raw materials.

Mentioned as the aluminum compound are aluminum ethoxide, aluminum isopropoxide, aluminum-n-butoxide, aluminum-sec-butoxide, aluminum-tert-butoxide, aluminum acetylacetonato, oligomers thereof, aluminum nitrate, aluminum chloride, aluminum acetate, aluminum phosphate, aluminum sulfate, aluminum hydroxide, and the like are mentioned, for example.

As a specific example of zirconium alkoxide, the following substances are mentioned. Mentioned are zirconium tetramethoxide, zirconium tetraethoxide, zirconium tetra n-propoxide, zirconium tetraisopropoxide, zirconium tetra n-butoxide, zirconium tetra t-butoxide, and the like.

As the silicon alkoxide, various substances represented by General Formula $Si(OR)_4$ can be used. As R, the same or different lower alkyl groups, such as a methyl group, an ethyl group, a propyl group, an isopropyl group, a butyl group, and an isobutyl group, are mentioned.

As the titanium alkoxide, tetramethoxy titanium, tetraethoxy titanium, tetra n-propoxy titanium, tetra-isopropoxy titanium, tetra n-butoxy titanium, tetra-isobutoxy titanium, and the like are mentioned, for example.

As the zinc compound, zinc acetate, zinc chloride, zinc nitrate, zinc stearate, zinc oleate, zinc salicylate, and the like are mentioned, for example, and particularly zinc acetate and zinc chloride are suitable.

As magnesium compounds, magnesium alkoxides, such as dimethoxy magnesium, diethoxy magnesium, dipropoxy magnesium, and dibutoxy magnesium, magnesium acetyl acetonate, magnesium chloride, and the like are mentioned.

The organic solvent may be any substance insofar as the organic solvent does not gel the raw materials, such as alkoxide. Mentioned are, for example, alcohols, such as methanol, ethanol, 2-propanol, butanol, pentanol, and ethylene glycol or ethylene glycol-mono-n-propylether; various aliphatic or alicyclic hydrocarbons, such as n-hexane, n-octane, cyclohexane, cyclopentane, and cyclooctane; various aromatic hydrocarbons, such as toluene, xylene, and ethyl benzene; various esters, such as ethyl formate, ethyl acetate, n-butyl acetate, ethylene glycol monomethyl ether acetate, ethylene glycol monoethyl ether acetate, and ethylene glycol monobutyl ether acetate; various ketones, such as acetone, methyl ethyl ketone, methyl isobutyl ketone, and cyclohexanone; various ethers, such as dimethoxy ethane, tetrahydrofuran, dioxane, and diisopropyl ether; various chlorinated hydrocarbons, such as chloroform, methylene chloride, carbon tetrachloride, and tetrachloroethane; and aprotic polar solvents, such as N-methyl pyrrolidone, dimethyl formamide, dimethyl acetamide, and ethylene carbonate; and the like. From the respect of the stability of the solution, it is suitable to use alcohols among the various solvents mentioned above.

When using alkoxide raw materials, particularly alkoxides of aluminum, zirconium, and titanium have high reactivity with water and are rapidly hydrolyzed due to moisture in the air and addition of water to cause clouding and precipitation of the solution. An aluminum salt compound, a zinc salt compound, and a magnesium salt compound are difficult to dissolve only with the organic solvent and the stability of the solution is low. In order to avoid the problems, it is suitable to add a stabilizer to stabilize the solution.

As the stabilizer, for example, β-diketone compounds, such as acetyl acetone, dipirovayl methane, trifluoroacetyl acetone, hexafluoroacetyl acetone, benzoyl acetone, dibenzoyl methane, 3-methyl-2,4-pentanedione, and 3-ethyl-2,4-pentanedione; β-ketoester compounds, such as methyl acetoacetate, ethyl acetoacetate, allyl acetoacetate, benzyl acetoacetate, iso-propyl-acetoacetate, tert-butyl-acetoacetate, iso-butyl-acetoacetate, 2-methoxy ethyl-acetoacetate, and 3-keto-n-methyl valerate; alkanolamines, such as monoethanolamine, diethanolamine, and triethanolamine; and the like can be mentioned. The addition amount of the stabilizer is suitably about 1 in terms of molar ratio based on the alkoxide or the salt compound. After the addition of the stabilizer, it is suitable to add a catalyst for the purpose of promoting a part of the reaction in order to form a suitable precursor. As the catalyst, nitric acid, hydrochloric acid, sulfuric acid, phosphoric acid, acetic acid, ammonia, and the like can be mentioned, for example.

The aluminum oxide precursor sol can be applied onto the polymer layer 2 or the laminate surface above the polymer layer 2. As a coating method, known coating methods, such as a dipping method, a spin coating method, a spraying method, a printing method, a flow coating method, and combination thereof, can be used as appropriate, for example.

By drying and/or baking the applied aluminum oxide precursor sol film at 60°C or more and 250°C or less, an aluminum oxide film can be formed. As the heat treatment temperature is higher, the film density becomes higher. However, when the heat treatment temperature exceeds 250°C, damages, such as deformation, occur in the base material. The heat treatment temperature is more preferably 100°C or more and 200°C or less. The heating time is dependent on the heating temperature and is preferably 10 minutes or more.

The layer containing aluminum oxide as the main component formed on the polymer layer 2 by the above-described method causes deposition of crystals of the aluminum oxide by being immersed in warm water or being exposed to steam, so that the projections 5 are formed on the surface. By such a method, an amorphous aluminum oxide layer may remain in a lower portion of the projections 5 in the layer 4 having the projections.

By immersing the layer containing aluminum oxide as the main component in warm water, the surface of the layer containing aluminum oxide as the main component is subjected to a peptization action and the like, so that some components are eluted. Due to a difference in the solubility of various hydroxides in the warm water, crystals containing the aluminum oxide as the main component are deposited to the top layer and grow thereon. The temperature of warm water is preferably 40 to 100°C. The warm water treatment time is about 5 minutes to about 24 hours.

In a layer containing aluminum oxide to which oxides, such as $TiO_2$, $ZrO_2$, $SiO_2$, ZnO, and MgO, are added as different components as the main component, crystallization is performed using a difference of each component in the solubility in the warm water. Therefore, the size of the projections can be controlled over a wide range by changing the composition of an inorganic component unlike the case of the aluminum oxide single component. As a result, it becomes possible to control the projections formed by crystals over a wide range. When ZnO is used as an accessory component, eutectoid with the aluminum oxide is achieved. Therefore, the refractive index can be controlled over a wider range, so that excellent antireflection performance can be realized.

As the base material 1 for use in the invention, glass, resin, a glass mirror, a resin mirror, and the like are mentioned. As typical substances of the resin base material, the following substances are mentioned. Mentioned are films and molded articles of thermoplastic resin, such as polyester, triacetyl cellulose, cellulose acetate, polyethylene

terephthalate, polypropylene, polystyrene, polycarbonate, polysulfone, polymethacrylate, polymethacrylate, ABS resin, polyphenylene oxide, polyurethane, polyethylene, polycycloolefin, and polyvinyl chloride; and crosslinked films and crosslinked articles obtained from various kinds of thermosetting resin, such as unsaturated polyester resin, phenol resin, crosslinked polyurethane, crosslinked acrylic resin, and crosslinked saturated polyester resin; and the like. As specific examples of the glass, nonalkali glass and alumina silicate glass can be mentioned. The base material for use in the invention may be any substance insofar as it can be finally formed into a shape according to the intended use and a flat plate, a film, a sheet, and the like are used. The base material may be one having a two-dimensional or three-dimensional curved surface. The thickness can be determined as appropriate and is generally 5 mm or less but the thickness is not limited thereto.

The process of forming the porous layer of the invention suitably has a process of applying a solution containing silicon oxide particles having a number average particle diameter of 1 nm or more and 100 nm or less to form a film in which the silicon oxide fine particles are deposited, and a process of drying and/or baking the film in which the silicon oxide fine particles are deposited at 50°C or more and 250°C or less to form a porous layer of the silicon oxide. As a coating method for the solution containing the silicon oxide particles, the same methods as the methods of applying the polymer solution described above can be used.

**EXAMPLES**

Hereinafter, the invention is specifically described with reference to Examples. However, the invention is not limited to the Examples. Optical films having fine unevenness (projections) containing crystals of aluminum oxide on the surface obtained in each of Examples and Comparative Examples were evaluated by the following methods.

(1) Synthesis of maleimide copolymer 1 and preparation of solution

6.1 g of N-cyclohexyl maleimide (hereinafter abbreviated as CHMI), 4.0 g of 2,2,2-trifluoroethyl methacrylate (Product name M-3F: manufactured by Kyoeisha Chemical Co., Ltd.), 0.45 g of 3-(methacryloyloxy)propyltrimethoxysilane (Product name LS-3380: manufactured by Shin-Etsu Chemical Co., Ltd.), and 0.08 g of 2,2'-azobis(isobutyronitrile) (hereinafter abbreviated as AIBN) were dissolved by stirring in 24.8 g of toluene. Degassing and replacement with nitrogen were repeatedly performed while cooling the solution in ice water, and then the solution was stirred at 60 to 70°C for 7 hours under nitrogen flow. A polymerization solution was slowly charged into strongly stirred methanol, the deposited polymer was separated by filtration, and then the polymer was stirred and washed several times in methanol. The polymer which was separated by filtration and collected was vacuum dried at 80 to 90°C. Then, 8.3 g (81% yield) of a white powdery maleimide copolymer 1 having a maleimide copolymerization ratio of 0.57 was obtained. The number average molecular weight was 16,400 as measured by GPC. Table 1 shows the synthesis result of each polymer. From the IR spectrum, the absorption due to the C=O stretching vibration of the imide ring was observed at 1700 $cm^{-1}$ and the absorption due to the C=O stretching vibration of the methacrylate unit was observed at 1750 $cm^{-1}$. Fig. 6 shows the IR spectrum chart.

2.2 g of the maleimide copolymer 1 powder was dissolved in 97.8 g of a cyclopentanone/cyclohexanone mixed solvent, thereby preparing a solution of the maleimide copolymer 1.

[Chem. 3]

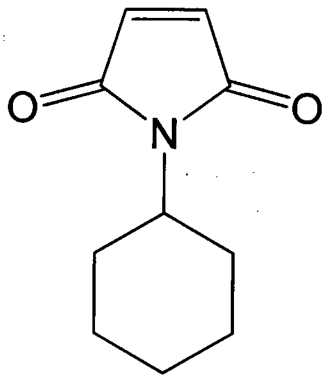

CHMI

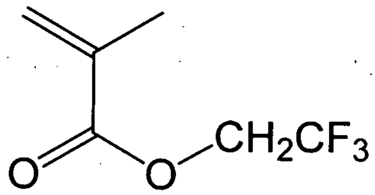

M-3F

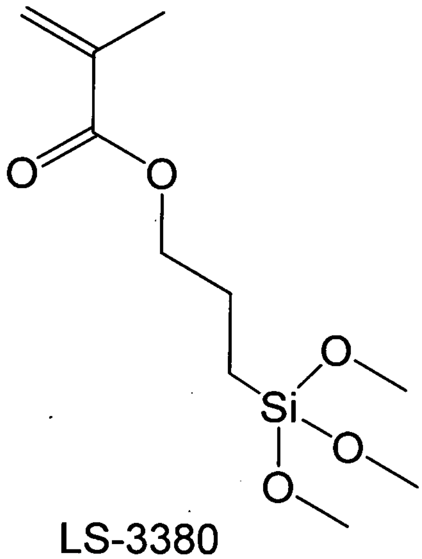

LS-3380

[Table 1]

| | Maleimide monomer | | Methacrylate monomer | | Methacrylate monomer | | Yield % | Number average molecular weight g/mol | IR spectrum (Derived from C=O stretching vibration) $cm^{-1}$ | | |
|---|---|---|---|---|---|---|---|---|---|---|---|
| | Type | Copolymerization ratio | Type | Copolymerization ratio | Type | Copolymerization ratio | | | Maleimide structure | | Methacrylate unit |
| Maleimide copolymer 1 | CHMI | 0.57 | M-3F | 0.4 | LS-3380 | 0.03 | 81 | 16400 | 1700 | - | 1750 |
| Maleimide copolymer 2 | CHMI | 0.67 | M-3F | 0.3 | LS-3380 | 0.03 | 86 | 13200 | 1690 | - | 1750 |
| Maleimide copolymer 3 | CHMI | 0.77 | M-3F | 0.2 | LS-3380 | 0.03 | 84 | 14000 | 1690 | - | 1750 |
| Maleimide copolymer 4 | CHMI | 0.5 | MMA | 0.5 | LS-3380 | 0.03 | 96 | 17100 | 1690 | 1770 | 1750 |
| Maleimide copolymer 5 | MeMI | 0.67 | M-3F | 0.3 | LS-3380 | 0.03 | 71 | 18500 | 1700 | 1770 | 1730 |
| Maleimide homopolymer | CHMI | 1 | - | - | - | - | 88 | 20500 | 1690 | 1770 | - |
| Fluorine-containing polymethacrylate | - | - | M-3F | 1 | - | - | 79 | 6000 | - | - | 1750 |

(2) Synthesis of maleimide copolymer 2 and preparation of solution

Polymerization and extraction were performed using 7.2 g of CHMI, 3.0 g of M-3F, 0.45 g of LS-3380, 0.08 g of AIBN, and 24.9 g of toluene by the same method as that of the maleimide copolymer 1. 9.1 g (86% yield) of a white powdery maleimide copolymer 2 having a maleimide copolymerization ratio of 0.67 was obtained. The number average molecular weight was 13,200. From the IR spectrum, the absorption due to the C=O stretching vibration of the imide ring was observed at 1690 $cm^{-1}$ and the absorption due to the C=O stretching vibration of the methacrylate unit was observed at 1750 $cm^{-1}$.

2.2 g of the maleimide copolymer 2 powder was dissolved in 97.8 g of a cyclopentanone/cyclohexanone mixed solvent, thereby preparing a solution of the maleimide copolymer 2.

(3) Synthesis of maleimide copolymer 3 and preparation of solution

Polymerization and extraction were performed using 8.3 g of CHMI, 2.0 g of M-3F, 0.45 g of LS-3380, 0.08 g of AIBN, and 25.1 g of toluene by the same method as that of the maleimide copolymer 1. 9.0 g (84% yield) of a white powdery maleimide copolymer 3 having a maleimide copolymerization ratio of 0.77 was obtained. The number average molecular weight was 14,000. From the IR spectrum, the absorption due to the C=O stretching vibration of the imide ring was observed at 1690 $cm^{-1}$ and the absorption due to the C=O stretching vibration of the methacrylate unit was observed at 1750 $cm^{-1}$.

2.2 g of the maleimide copolymer 3 powder was dissolved in 97.8 g of a cyclopentanone/cyclohexanone mixed solvent, thereby preparing a solution of the maleimide copolymer 3.

(4) Synthesis of maleimide copolymer 4 and preparation of solution

Polymerization and extraction were performed using 5.4 g of CHMI, 2.8 g of methyl methacrylate (hereinafter abbreviated as MMA), 0.45 g pf LS-3380, 0.08 g of AIBN, and 20.2 g of toluene by the same method as that of the maleimide copolymer 1. 8.3 g (96% yield) of a white powdery maleimide copolymer 4 having a maleimide copolymerization ratio of 0.67 was obtained. The number average molecular weight was 17,100. From the IR spectrum, the absorption due to the C=O stretching vibration of the imide ring was observed at 1690 $cm^{-1}$ and 1770 $cm^{-1}$ and the absorption due to the C=O stretching vibration of the methacrylate unit was observed at 1750 $cm^{-1}$. Fig. 7 shows the IR spectrum chart.

2.2 g of the maleimide copolymer 4 powder was dissolved in 97.8 g of a cyclopentanone/cyclohexanone mixed solvent, thereby preparing a solution of the maleimide copolymer 4.

[Chem. 4]

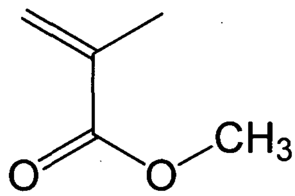

MMA

(5) Synthesis of maleimide copolymer 5 and preparation of solution

Polymerization and extraction were performed using 4.5 g of N-methyl maleimide (hereinafter abbreviated as MeMI), 3.0 g of M-3F, 0.45 g of LS-3380, 0.08 g of AIBN, and 18.5 g of toluene by the same method as that of the maleimide copolymer 1. 5.6 g (71% yield) of a white powdery maleimide copolymer 5 having a maleimide copolymerization ratio of 0.67 was obtained. The number average molecular weight was 18,500. From the IR spectrum, the absorption due to the C=O stretching vibration of the imide ring was observed at 1700 $cm^{-1}$ and 1770 $cm^{-1}$ and the absorption due to the C=O stretching vibration of the methacrylate unit was observed at 1730 $cm^{-1}$. Fig. 8 shows the IR spectrum chart.

2.0 g of the maleimide copolymer 5 powder was dissolved in 98.0 g of a cyclopentanone/cyclohexanone mixed solvent, thereby preparing a solution of the maleimide copolymer 5.

[Chem. 5]

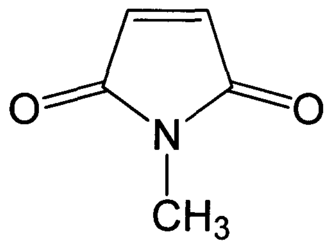

MeMI

(6) Synthesis of maleimide homopolymer and preparation of solution

Polymerization and extraction were performed using 10.8 g of CHMI, 0.08 g of AIBN, and 32.2 g of toluene by the same method as that of the maleimide copolymer 1. 8.4 g (88% yield) of a pale yellow powdery maleimide homopolymer was obtained. The number average molecular weight was 20,500. From the IR spectrum, the absorption due to the C=O stretching vibration of the imide ring was observed at 1690 $cm^{-1}$ and 1770 $cm^{-1}$. Fig. 9 shows the IR spectrum chart.
2.0 g of the maleimide polymer powder was dissolved in 98.0 g of a cyclopentanone/cyclohexanone mixed solvent, thereby preparing a solution of the maleimide homopolymer.

(7) Synthesis of fluorine-containing polymethacrylate and preparation of solution

Polymerization and extraction were performed using 10.1 g of M-3F, 0.08 g of AIBN, and 15.1 g of toluene by the same method as that of the maleimide copolymer 1. 8.0 g (79% yield) of white powdery fluorine-containing polymethacrylate was obtained. The number average molecular weight was 6,000. From the IR spectrum, the absorption due to the C=O stretching vibration of the imide ring was observed at 1750 $cm^{-1}$. Fig. 10 shows the IR spectrum chart.
2.3 g of the fluorine-containing polymethacrylate powder was dissolved in 97.7 g of a cyclopentanone/cyclohexanone mixed solvent, thereby preparing a solution of the fluorine-containing polymethacrylate.

(8) Synthesis of aliphatic polyimide and preparation of solution

7.4 g 4,4'-methylenebis (aminocyclohexane) (hereinafter abbreviated as DADCM) and 3.9 g of 1,3-bis(3-aminopropyl)tetramethyl disiloxane (Product name PAM-E: manufactured by Shin-Etsu Chemical Co., Ltd.) were dissolved in 97.1 g N,N-dimethyl acetamide (hereinafter abbreviated as DMAc). 13.0 g of 5-(2,5-dioxotetrahydrofuryl)-3-methyl-3-cyclohexene-1,2-dicarboxylic anhydride (Product name B-4400: manufactured by DIC) was slowly added while stirring the diamine solution under water cooling. This solution was stirred at room temperature for 15 hours to perform polymerization reaction. Furthermore, the resultant substance was diluted with 182 g of DMAc, and then 7.4 ml of pyridine and 3.8 ml of acetic anhydride were added, and then the mixture was stirred at room temperature for 1 hour. The mixture was further stirred for 4 hours while heating to 60 to 70°C in an oil bath. The polymerization solution was slowly charged into strongly stirred methanol to separate the deposited polymer by filtration, and then the polymer was stirred and washed several times in methanol. The polymer which was separated by filtration and collected was vacuum dried at 80 to 90°C. 21 g (87% yield) of white powdery aliphatic polyimide was obtained. The number average molecular weight was 23,200 and the imidization ratio was 98% from the $^1H$-NMR spectrum.
1.7 g of the aliphatic polyimide powder was dissolved in 98.3 g of a cyclopentanone/cyclohexanone mixed solvent, thereby preparing an aliphatic polyimide solution.

[Chem. 6]

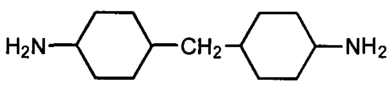

DADCM

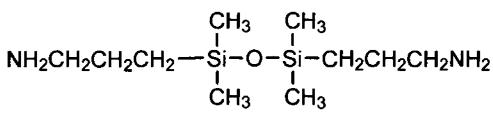

PAM-E

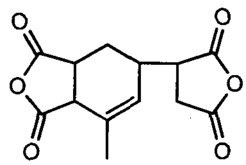

B-4400

(9) Preparation of solution of poly(methyl methacrylate) (PMMA)

1.7 g of poly(methyl methacrylate) (hereinafter abbreviated as PMMA, manufactured by Kishida Chemical Co., Ltd.) was dissolved in 98.3 g of a cyclopentanone/cyclohexanone mixed solvent, thereby preparing a PMMA solution.

(10) Preparation of aluminum oxide precursor sol

14.8 g of aluminum-sec-butoxide (ASBD, manufactured by Kawaken Fine Chemicals Co., Ltd.) was used and 3.42 g of 3-methyl-2,4-pentanedione and 2-ethyl butanol were mixed and stirred in the aluminum sec-butoxide until the solution became uniform. 1.62 g of 0.01 M dilute hydrochloric acid was dissolved in a mixed solvent of 2-ethyl-butanol/1-ethoxy 2-propanol, slowly added to the aluminum sec-butoxide solution, and then stirred for a while. The solvent was prepared in such a manner as to obtain a mixed solvent in which the mixing ratio of the 2-ethyl butanol and the 1-ethoxy-2-propanol was finally 7/3. The solution was further stirred in a 120°C oil bath for 2 to 3 hours or more, thereby preparing an aluminum oxide precursor sol.

(10) Preparation of silicon oxide fine particle sol

10 g of ethyl silicate was dissolved in 100 ml of ethanol, 30 ml of an ammonia solution was added, and then the mixture was stirred at room temperature for 8 hours. 100 ml of 1-butanol was added, and then water and ethanol were distilled off by an evaporator, thereby preparing a silicon oxide fine particle sol.

(11) Measurement of molecular weight

The measurement was performed by a gel permeation chromatography (GPC) apparatus (manufactured by WATERS) in which two Shodex LF-804 columns (manufactured by Showa Denko K.K.) were arranged in series at 40°C using THF as a developing solvent with an RI (Refractive Index, Differential refractive index) detector. The obtained number average molecular weight was a value in terms of standard polystyrene.

(12) Measurement of infrared transmission spectrum of polymer powder

The infrared transmission spectrum in the range of 650 $cm^{-1}$ to 4000 $cm^{-1}$ was measured using an infrared spectrum spectral measurement apparatus (Spectrum One, manufactured by PerkinElmer) and an universal ATR attached thereto.

(13) Cleaning of substrate

A glass substrate with a size of about φ30 mm and a thickness of about 5 mm whose both surfaces were polished was subjected to ultrasonic cleaning in an alkali detergent, rinsed with pure water, and then dried in a clean oven at 60°C for 30 minutes.

(14) Measurement of reflectance

The reflectance when the incident angle was 0° in the range of 400 to 700 nm was measured using an absolute reflectance meter (USPM-RU, manufactured by Olympus). The case where the minimum value was less than 0.05% was judged as ○ and the case where the minimum value was 0.05% or more was judged as ×. The case where the average value was less than 0.1% was judged as ○, the case where the average value was 0.1% or more and less than 0.2% was judged as Δ, and the case where the average value was 0.2% or more was judged as ○.

(15) Transmission observation

Light of a slide projector was made to transmit to visually observe whether the film was cloudy or not. The case where clouding was not observed was judged as ○ and the case where clouding was observed was judged as ×.

(16) Measurement of film thickness

The film thickness was measured using a spectrum ellipsometer (VASE, manufactured by J. A. Woolam Japan Co., Inc.) in the wavelength range of 380 nm to 800 nm, and then the film thickness was determined from the analysis.

(17) Measurement of refractive index

The refractive index was measured in the wavelength range of 380 nm to 800 nm using a spectrum ellipsometer (VASE, manufactured by J. A. Woolam Japan Co., Inc.). The refractive index was the refractive index at a wavelength of 550 nm.

(18) Observation of substrate surface

The substrate surface was subjected to Pd/Pt treatment, and then the surface was observed at an accelerating voltage of 2 kV using FE-SEM (S-4800, manufactured by Hitachi high technology).

**EXAMPLE 1**

To the cleaned glass substrate of nd = 1.58 and vd = 59 containing $SiO_2$ and BaO as the main component, an appropriate amount of the solution of the maleimide copolymer 1 was added dropwise, and then spin coating was further performed at 4000 rpm for 20 seconds. This substrate was heated at 140°C for 30 minutes, thereby producing a substrate with the maleimide copolymer 1 film having a film thickness of 40 nm and a refractive index at a wavelength of 550 nm of 1.472.

An appropriate amount of the aluminum oxide precursor sol was added dropwise onto the maleimide copolymer 1 film, and then spin coating was performed at 4000 rpm for 20 seconds. The resultant film was heated at 140°C for 60 minutes, thereby producing a substrate on which the maleimide copolymer 1 film and an amorphous aluminum oxide film were laminated.

Next, the substrate was immersed in 80°C warm water for 20 minutes, and then dried at 60°C for 15 minutes. The obtained substrate surface was subjected to FE-SEM observation. Then, a fine projection-like structure in which crystals containing aluminum oxide as the main component were randomly and complicatedly entangled was observed.

Subsequently, the absolute reflectance of the substrate surface was measured and, then an excellent glass substrate with an antireflection film having an absolute reflectance at a wavelength of 550 nm of 0.10% and an average value of 0.19% was obtained. Clouding due to light scattering did not occur. Even when the substrate was allowed to stand for 1000 hours under a high temperature and high humidity environment of 60°C/100%RH, the reflectance change was less than 0.1% and clouding also did not occur. The results were shown in Table 2 and Fig. 11.

[Table 2]

| | Polymer layer | | | Top layer | Absolute reflectance % | | Appearance | High-temperature high-humidity test | |
|---|---|---|---|---|---|---|---|---|---|
| | Type | Film thickness nm | Refractive index at 550 nm | | 550 nm | Average 400 to 700 nm | | Reflectance change % | Appearance |
| Ex. 1 | Maleimide copolymer 1 | 40 | 1.472 | Uneven structure of aluminum oxide | ○ 0.1 | ○ 0.19 | ○ | ○ < 0.1 | ○ |
| Ex. 2 | Maleimide copolymer 2 | 40 | 1.483 | Uneven structure of aluminum oxide | ○ 0.11 | ○ 0.21 | ○ | ○ < 0.1 | ○ |
| Ex. 3 | Maleimide copolymer 3 | 41 | 1.495 | Uneven structure of aluminum oxide | ○ 0.11 | ○ 0.25 | ○ | ○ < 0.1 | ○ |
| Ex. 4 | Maleimide copolymer 4 | 40 | 1.497 | Uneven structure of aluminum oxide | ○ 0.11 | ○ 0.24 | ○ | ○ < 0.1 | ○ |
| Ex. 5 | Maleimide copolymer 5 | 40 | 1.478 | Uneven structure of aluminum oxide | ○ 0.1 | ○ 0.2 | ○ | ○ < 0.1 | ○ |
| Comp. Ex. 1 | Fluorine-containing polymethacrylate | 38 | 1.405 | Uneven structure of aluminum oxide | Unmeasurable | Unmeasurable | × | - | - |
| Comp. Ex. 2 | Maleimide homopolymer | 41 | 1.52 | Uneven structure of aluminum oxide | × 0.15 | × 0.32 | ○ | Δ > 0.1 | Δ Peripheral spot |
| Comp. Ex. 3 | PMMA | 40 | 1.492 | Uneven structure of aluminum oxide | ○ 0.11 | ○ 0.23 | × | × > 0.2 | × |
| Comp. Ex. 4 | Aliphatic polyimide | 42 | 1.533 | Uneven structure of aluminum oxide | × 0.17 | × 0.35 | ○ | Δ > 0.1 | ○ |
| Ex. 6 | Maleimide copolymer 1 | 40 | 1.472 | Porous layer of silicon oxide particles | ○ 0.01 | ○ 0.25 | ○ | ○ < 0.1 | ○ |
| Comp. Ex. 5 | Maleimide homopolymer | 41 | 1.52 | Porous layer of silicon oxide particles | ○ 0.1 | × 0.32 | ○ | Δ > 0.1 | Δ Peripheral spot |

**EXAMPLE 2**

A substrate with an antireflection film was produced by the same method as that of Example 1, except using the solution of the maleimide copolymer 2 in place of the solution of the maleimide copolymer 1 as the polymer solution. In the middle of the process, the film thickness of the maleimide copolymer 2 film was 40 nm and the refractive index at a wavelength of 550 nm was 1.483. An excellent glass substrate with an antireflection film having an absolute reflectance at a wavelength of 550 nm after the formation of a fine projection-like structure of 0.11% and an average value of 0.21% was obtained. Clouding due to light scattering also did not occur. Even when the substrate was allowed to stand for 1000 hours under a high temperature and high humidity environment of 60°C/100%RH, the reflectance change was less than 0.1% and clouding also did not occur.

**EXAMPLE 3**

A substrate with an antireflection film was produced by the same method as that of Example 1, except using the solution of the maleimide copolymer 3 in place of the solution of the maleimide copolymer 1 as the polymer solution. In the middle of the process, the film thickness of the maleimide copolymer 2 film was 41 nm and the refractive index at a wavelength of 550 nm was 1.495. An excellent glass substrate with an antireflection film having an absolute reflectance at a wavelength of 550 nm after the formation of a fine projection-like structure of 0.11% and an average value of 0.25% was obtained. Clouding due to light scattering also did not occur. Even when the substrate was allowed to stand for 1000 hours under a high temperature and high humidity environment of 60°C/100%RH, the reflectance change was less than 0.1% and clouding also did not occur.

**EXAMPLE 4**

A substrate with an antireflection film was produced by the same method as that of Example 1, except using the solution of the maleimide copolymer 4 in place of the solution of the maleimide copolymer 1 as the polymer solution. In the middle of the process, the film thickness of the maleimide copolymer 2 film was 40 nm and the refractive index at a wavelength of 550 nm was 1.497. An excellent glass substrate with an antireflection film having an absolute reflectance at a wavelength of 550 nm after the formation of a fine projection-like structure of 0.11% and an average value of 0.24% was obtained. Clouding due to light scattering also did not occur. Even when the substrate was allowed to stand for 1000 hours under a high temperature and high humidity environment of 60°C/100%RH, the reflectance change was less than 0.1% and clouding also did not occur.

**EXAMPLE 5**

A substrate with an antireflection film was produced by the same method as that of Example 1, except using the solution of the maleimide copolymer 5 in place of the solution of the maleimide copolymer 1 as the polymer solution. In the middle of the process, the film thickness of the maleimide copolymer 2 film was 40 nm and the refractive index at a wavelength of 550 nm was 1.478. An excellent glass substrate with an antireflection film having an absolute reflectance at a wavelength of 550 nm after the formation of a fine projection-like structure of 0.10% and an average value of 0.20% was obtained. Clouding due to light scattering also did not occur. Even when the substrate was allowed to stand for 1000 hours under a high temperature and high humidity environment of 60°C/100%RH, the reflectance change was less than 0.1% and clouding also did not occur.

**COMPARATIVE EXAMPLE 1**

A substrate with an antireflection film was produced by the same method as that of Example 1, except using the solution of the fluorine-containing polymethacrylate in place of the solution of the maleimide copolymer 1 as the polymer solution. In the middle of the process, the film thickness of the fluorine-containing polymethacrylate film was 38 nm and the refractive index at a wavelength of 550 nm was 1.405. However, when forming an amorphous aluminum oxide film, countless cracks occurred, and the measurement of the absolute reflectance after the formation of a fine projection-like structure was not able to be performed.

**COMPARATIVE EXAMPLE 2**

A substrate with an antireflection film was produced by the same method as that of Example 1, except using the solution of the maleimide homopolymer in place of the maleimide copolymer 1 as the polymer solution. The film thickness of the maleimide homopolymer film was 41 nm and the refractive index at a wavelength of 550 nm was 1.520.

The absolute reflectance at a wavelength of 550 nm after the formation of a fine projection-like structure was 0.15% and the average value was 0.32%, so that the antireflection properties were insufficient. Clouding due to light scattering also did not occur. When the substrate was allowed to stand for 1000 hours under a high temperature and high humidity environment of 60°C/100%RH, the reflectance change slightly exceeded 0.1%. Spots were slightly observed in the peripheral portion.

## COMPARATIVE EXAMPLE 3

A substrate with an antireflection film was produced by the same method as that of Example 1, except using the solution of PMMA in place of the maleimide copolymer 1 as the polymer solution. The film thickness of the PMMA film was 40 nm and the refractive index at a wavelength of 550 nm was 1.492. The absolute reflectance at a wavelength of 550 nm after the formation of a fine projection-like structure was 0.11% and the average value was 0.23%, so that the antireflection properties were sufficient. However, the occurrence of clouding due to separation was observed in the peripheral portion. When the substrate was allowed to stand for 1000 hours under a high temperature and high humidity environment of 60°C/100%RH, the absolute reflectance considerably changed and the separation further advanced.

## COMPARATIVE EXAMPLE 4

A substrate with an antireflection film was produced by the same method as that of Example 1, except using the solution of polyimide in place of the maleimide copolymer 1 as the polymer solution. The film thickness of the polyimide film was 42 nm and the refractive index at a wavelength of 550 nm was 1.533. The absolute reflectance at a wavelength of 550 nm after the formation of a fine projection-like structure was 0.17% and the average value was 0.35%, so that the antireflection properties were insufficient. Clouding due to light scattering did not occur. When the substrate was allowed to stand for 1000 hours under a high temperature and high humidity environment of 60°C/100%RH, the reflectance change slightly exceeded 0.1%. Clouding and the like did not occur.

## EXAMPLE 6

An appropriate amount of the solution of the maleimide copolymer 1 was added dropwise onto the cleaned glass substrate of nd = 1.58 and νd = 59 containing $SiO_2$ and BaO as the main component, and then spin coating was further performed at 4000 rpm for 20 seconds. This substrate was heated at 140°C for 30 minutes, thereby producing a substrate with the maleimide copolymer 1 film having a film thickness of 40 nm and a refractive index at a wavelength of 550 nm of 1.472.

An appropriate amount of the silicon oxide fine particle sol was added dropwise onto the maleimide copolymer 1 film, spin coating was performed at 3000 rpm for 20 seconds, and then the resultant substance was baked at 150°C for 120 minutes in a convection oven, thereby forming a porous film of the silicon oxide having a film thickness of 100 nm and a refractive index 1.25 on the polymer film.

An excellent glass substrate with an antireflection film having an absolute reflectance at a wavelength of 550 nm after the formation of the porous film of 0.01% and an average value of 0.25% was obtained (Fig. 12).

## COMPARATIVE EXAMPLE 5

A substrate with an antireflection film was produced by the same method as that of Example 6, except using the solution of the maleimide homopolymer in place of the maleimide copolymer 1 as the polymer solution. The film thickness of the maleimide homopolymer film was 41 nm and the refractive index at a wavelength of 550 nm was 1.520. The absolute reflectance at a wavelength of 550 nm after the formation of a fine projection-like structure was 0.1 % and the average value was 0.32%, so that the antireflection properties were insufficient. Clouding due to light scattering also did not occur. When the substrate was allowed to stand for 1000 hours under a high temperature and high humidity environment of 60°C/100%RH, the reflectance change exceeded 0.1 %. Spots were slightly observed in the peripheral portion. While the present invention has been described with reference to exemplary embodiments, it is to be understood that the invention is not limited to the disclosed exemplary embodiments.

## Industrial Applicability

The optical member of the invention can be applied to transparent base materials with a low refractive index and demonstrates excellent antireflection effects to visible light. Thus, the invention can be utilized for optical members, such as various displays of word processors, computers, televisions, plasma display panels, and the like; optical members, such as polarizing plates for use in liquid crystal displays, sunglass lenses containing various optical glass materials

and transparent plastics, prescription glasses, finder lenses for cameras, prisms, fly eye lenses, toric lenses, and various optical filters and sensors; various optical lenses employing the same, such as image pickup optical systems, observation optical systems, such as binoculars, projection optical systems for use in liquid crystal projectors, and scanning optical systems for use in laser beam printers; covers of various instruments, and window glasses of automobiles and electric trains.

**Reference Signs List**

1 Base Material
2 Polymer Layer
3 Porous Layer
4 Uneven (Projections) layer
5 Unevenness (Projections)
6 Inclination Direction of Projections
7 Inclination Direction of Projections
8 Tangent to Base Material Surface

**Claims**

1. An optical member comprising:

a laminated body being formed on a base material (1) surface and having a porous layer (3) or a layer (4) having an uneven structure (5) on a surface, wherein
the laminated body has a polymer layer having a layer thickness of 10 nm or more and 150 nm or less between the porous layer or the layer having an uneven structure and the base material;
**characterized in that**
the polymer layer contains a maleimide copolymer; and
the maleimide copolymer has a maleimide copolymerization ration of 0.5 or more and 0.97 or less.

2. The optical member according to Claim 1, wherein
the maleimide copolymer contains a copolymer having a maleimide unit represented by the following general formula (1) and a (meth)acrylate unit represented by the following general formula (2):

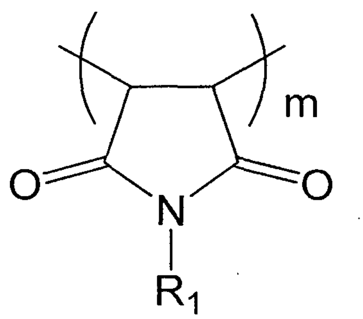

(1)

wherein, in Formula 1, R1 is a linear, branched, or cyclic alkyl group or alkenyl group having 1 to 8 carbon atoms which is not substituted or substituted with a phenyl group, a hydroxyl group, an alkoxyl group, an acetoxyl group, a cyclic ether group, an amino group, an alkoxysilyl group, or a halogen atom, and wherein m is an integer of 1 or more;

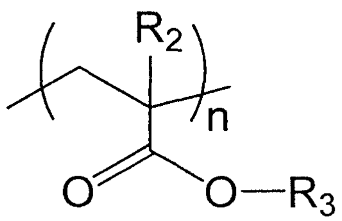

(2)

wherein, in Formula 2, R2 is hydrogen or a methyl group and R3 is a linear, branched, or cyclic alkyl group or alkenyl group having 1 to 8 carbon atoms which is not substituted or substituted with a hydroxyl group, an alkoxyl group, an acetoxyl group, a cyclic ether group, an amino group, an alkoxysilyl group, or a halogen atom, and wherein n is an integer of 1 or more.

**3.** The optical member according to Claim 1 or 2, wherein the polymer layer has a refractive index of 1.43 or more and less than 1.5.

**4.** The optical member according to any one of Claims 1 to 3, wherein
when a refractive index of the base material is set to nb, a refractive index of the polymer layer is set to ni, and a refractive index of the porous layer is set to ns, the optical member satisfies nb > ni > ns.

**5.** The optical member according to any one of Claims 1 to 4, wherein
the layer having an uneven structure is formed with a crystal containing aluminum oxide as a main component.

**6.** The optical member according to any one of Claims 1 to 4, wherein
the porous layer is a layer in which silicon oxide fine particles are deposited.

**7.** A method for manufacturing an optical member in which a laminated body is formed on a base material surface, the method comprising:

applying a polymer solution onto the base material or a thin film provided on the base material;
drying and/or baking the applied polymer solution to form a polymer layer; and
forming a porous layer or a layer having an uneven structure on the polymer layer;
**characterized in that**
the polymer solution contains a maleimide copolymer, wherein the maleimide copolymer has a maleimide copolymerization ratio of 0.5 or more and 0.97 or less; and
the drying and/or baking is performed at 23 °C or more and 180 °C or less to form a polymer layer containing the maleimide copolymer.

**8.** The method for manufacturing an optical member according to Claim 7, wherein
the maleimide copolymer contains a copolymer having a maleimide unit represented by the following general formula (1) and a (meth)acrylate unit represented by the following general formula (2):

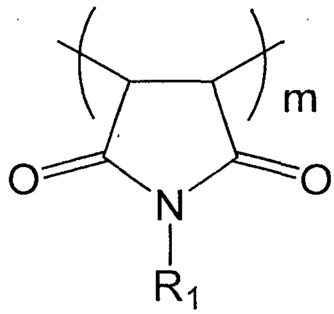
(1)

wherein, in Formula 1, R1 is a linear, branched, or cyclic alkyl group or alkenyl group having 1 to 8 carbon atoms which is not substituted or substituted with a phenyl group, a hydroxyl group, an alkoxyl group, an acetoxyl group, a cyclic ether group, an amino group, an alkoxysilyl group, or a halogen atom, and wherein m is an integer of 1 or more;

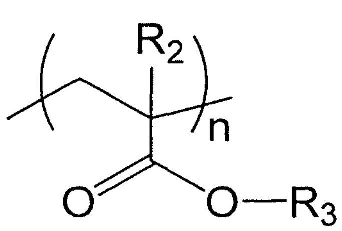
(2)

wherein, in Formula 2, R2 is hydrogen or a methyl group and R3 is a linear, branched, or cyclic alkyl group or alkenyl

group having 1 to 8 carbon atoms which is not substituted or substituted with a hydroxyl group, an alkoxyl group, an acetoxyl group, a cyclic ether group, an amino group, an alkoxysilyl group, or a halogen atom, and wherein n is an integer of 1 or more.

**9.** The method for manufacturing an optical member according to Claim 7 or 8, wherein the formation of the layer having an uneven structure comprises:

applying an aluminum oxide precursor sol;
drying and/or baking the applied aluminum oxide precursor sol at 50 °C or more and 250 °C or less to form an aluminum oxide film; and
immersing the aluminum oxide film in warm water to form a layer having an uneven structure formed with a crystal containing aluminum oxide as a main component.

**10.** The method for manufacturing an optical member according to Claim 7 or 8, wherein the formation of the porous layer comprises:

applying a solution containing silicon oxide particles having a number average particle diameter of 1 nm or more and 100 nm or less to produce a film in which the silicon oxide fine particles are deposited; and
drying and/or baking the film in which the silicon oxide fine particles are deposited at 50 °C or more and 250 °C or less to form a porous layer of the silicon oxide.

**Patentansprüche**

**1.** Optisches Element, umfassend:

einen laminierten Körper, der auf einer Fläche eines Basismaterials (1) gebildet ist und eine poröse Schicht (3) oder eine Schicht (4) mit einer unebenen Struktur (5) auf einer Fläche aufweist, wobei
der laminierte Körper eine Polymerschicht mit einer Schichtdicke von 10 nm oder mehr und 150 nm oder weniger zwischen der porösen Schicht oder der Schicht mit unebener Struktur und dem Basismaterial aufweist;
**dadurch gekennzeichnet, dass**
die Polymerschicht ein Maleimidcopolymer beinhaltet; und
das Maleimidcopolymer ein Maleimidcopolymerisationsverhältnis von 0,5 oder mehr und 0,97 oder weniger aufweist.

**2.** Optisches Element nach Anspruch 1, wobei das Maleimidcopolymer ein Copolymer mit einer Maleimideinheit, die durch die nachstehende allgemeine Formel (1) dargestellt ist, und eine durch die nachstehende allgemeine Formel (2) dargestellte (Meth)acrylateinheit beinhaltet:

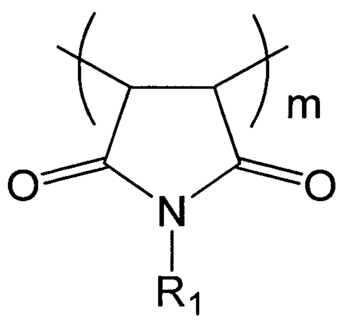

(1)

wobei in Formel 1 $R_1$ eine lineare, verzweigte oder zyklische Alkylgruppe oder Alkenylgruppe mit 1 bis 8 Kohlenstoffatomen darstellt, die nicht substituiert oder mit einer Phenylgruppe, einer Hydroxylgruppe, einer Alkoxylgruppe, einer Acetoxylgruppe, einer zyklischen Ethergruppe, einer Aminogruppe, einer Alkoxysilylgruppe, oder einem Halogenatom substituiert ist, und wobei m eine Ganzzahl von 1 oder mehr ist;

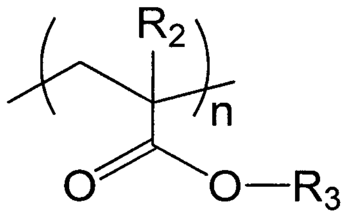

(2)

wobei in Formel 2 $R_2$ Wasserstoff oder eine Methylgruppe ist und $R_3$ eine lineare, verzweigte oder zyklische Alkylgruppe oder Alkenylgruppe mit 1 bis 8 Kohlenstoffatomen darstellt, die nicht substituiert oder mit einer Hydroxylgruppe, einer Alkoxylgruppe, einer Acetoxylgruppe, einer zyklischen Ethergruppe, einer Aminogruppe, einer Alkoxysilylgruppe, oder einem Halogenatom substituiert ist, und wobei n eine Ganzzahl von 1 oder mehr ist.

3. Optisches Element nach Anspruch 1 oder 2, wobei die Polymerschicht einen Brechungsindex von 1,43 oder mehr und weniger als 1,5 aufweist.

4. Optisches Element nach einem der Ansprüche 1 bis 3, wobei, wenn ein Brechungsindex des Basismaterials nb ist, ein Brechungsindex der Polymerschicht ni ist, und ein Brechungsindex der porösen Schicht ns ist, das optische Element der Bedingung nb > ni > ns genügt.

5. Optisches Element nach einem der Ansprüche 1 bis 4, wobei die Schicht mit unebener Struktur mit einem Kristall gebildet ist, der als Hauptkomponente Aluminiumoxid beinhaltet.

6. Optisches Element nach einem der Ansprüche 1 bis 4, wobei die poröse Schicht eine Schicht ist, in der Siliciumoxidfeinteilchen abgeschieden sind.

7. Verfahren zum Herstellen eines optischen Elements, in dem ein laminierter Körper auf einer Fläche eines Basismaterials gebildet wird, wobei das Verfahren umfasst:

Aufbringen einer Polymerlösung auf das Basismaterial oder einen auf dem Basismaterial vorgesehenen dünnen Film;
Trocknen und/oder Ausheizen der aufgebrachten Polymerlösung, um eine Polymerschicht zu bilden; und
Bilden einer porösen Schicht oder einer Schicht mit einer unebenen Struktur auf der Polymerschicht;
**dadurch gekennzeichnet, dass**
die Polymerlösung ein Maleimidcopolymer beinhaltet, wobei das Maleimidcopolymer ein Maleimidcopolymerisationsverhältnis von 0,5 oder mehr und 0,97 oder weniger aufweist; und
das Trocknen und/oder Ausheizen bei 23 °C oder mehr und 180 °C oder weniger durchgeführt wird, um eine das Maleimidcopolymer beinhaltende Polymerschicht zu bilden.

8. Verfahren zum Herstellen eines optischen Elements nach Anspruch 7, wobei das Maleimidcopolymer ein Copolymer mit einer Maleimideinheit, die durch die nachstehende allgemeine Formel (1) dargestellt ist, und eine durch die nachstehende allgemeine Formel (2) dargestellte (Meth)acrylateinheit beinhaltet:

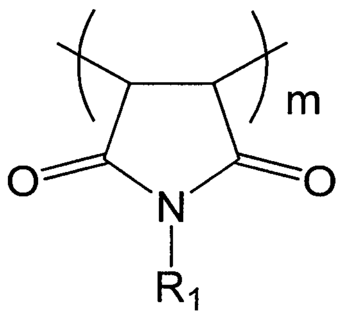

(1)

wobei in Formel 1 $R_1$ eine lineare, verzweigte oder zyklische Alkylgruppe oder Alkenylgruppe mit 1 bis 8 Kohlenstoffatomen darstellt, die nicht substituiert oder mit einer Phenylgruppe, einer Hydroxylgruppe, einer Alkoxylgruppe, einer Acetoxylgruppe, einer zyklischen Ethergruppe, einer Aminogruppe, einer Alkoxysilylgruppe, oder einem Halogenatom substituiert ist, und wobei m eine Ganzzahl von 1 oder mehr ist;

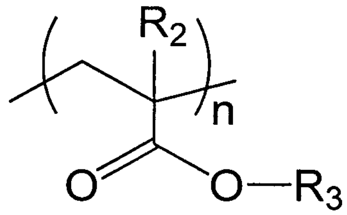
(2)

wobei in Formel 2 $R_2$ Wasserstoff oder eine Methylgruppe ist und $R_3$ eine lineare, verzweigte oder zyklische Alkylgruppe oder Alkenylgruppe mit 1 bis 8 Kohlenstoffatomen darstellt, die nicht substituiert oder mit einer Hydroxylgruppe, einer Alkoxylgruppe, einer Acetoxylgruppe, einer zyklischen Ethergruppe, einer Aminogruppe, einer Alkoxysilylgruppe, oder einem Halogenatom substituiert ist, und wobei n eine Ganzzahl von 1 oder mehr ist.

**9.** Verfahren zum Herstellen eines optischen Elements nach Anspruch 7 oder 8, wobei das Bilden der Schicht mit unebener Struktur umfasst:

Aufbringen eines Aluminiumoxid-Vorläufer-Sols;
Trocknen und/oder Ausheizen des aufgebrachten Aluminiumoxid-Vorläufer-Sols bei 50 °C oder mehr und 250 °C oder weniger, um einen Aluminiumoxidfilm zu bilden; und
Eintauchen des Aluminiumoxidfilms in warmes Wasser, um eine Schicht mit unebener Struktur zu bilden, die mit einem Kristall gebildet ist, der als Hauptkomponente Aluminiumoxid beinhaltet.

**10.** Verfahren zum Herstellen eines optischen Elements nach Anspruch 7 oder 8, wobei das Bilden der porösen Schicht umfasst:

Aufbringen einer Siliciumoxidteilchen mit einem zahlenmittleren Teilchendurchmesser von 1 nm oder mehr und 100 nm oder weniger beinhaltenden Lösung, um einen Film zu erzeugen, in dem die Siliciumoxidfeinteilchen abgeschieden sind; und
Trocknen und/oder Ausheizen des Films, in dem die Siliciumoxidfeinteilchen abgeschieden sind, bei 50 °C oder mehr und 250 °C oder weniger, um eine poröse Schicht des Siliciumoxids zu bilden.

## Revendications

**1.** Élément optique comprenant :

un corps laminé qui est formé sur une surface de matériau de base (1) et ayant une couche poreuse (3) ou une couche (4) ayant une structure irrégulière (5) sur une surface, où :

le corps laminé a une couche de polymère ayant une épaisseur de couche de 10 nm ou plus et de 150 nm ou moins entre la couche poreuse ou la couche ayant une structure irrégulière et le matériau de base ;
**caractérisé en ce que** :

la couche de polymère contient un copolymère de maléimide ; et
le copolymère de maléimide a un rapport de copolymérisation de maléimide de 0,5 ou plus et de 0,97 ou moins.

**2.** Élément optique selon la revendication 1, dans lequel :

le copolymère de maléimide consiste en un copolymère ayant un motif maléimide représenté par la formule générale (1) suivante et un motif (méth)acrylate représenté par la formule générale (2) suivante :

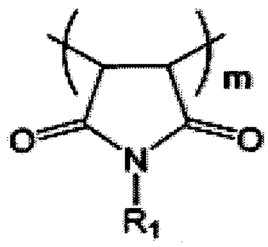

(1)

où, dans la formule 1, $R_1$ est un groupe alkyle linéaire, ramifié ou cyclique ou un groupe alcényle ayant 1 à 8 atomes de carbone qui n'est pas substitué ou est substitué avec un groupe phényle, un groupe hydroxyle, un groupe alkoxyle, un groupe acétoxyle, un groupe éther cyclique, un groupe amino, un groupe alkoxysilyle ou un atome d'halogène, et où m est un nombre entier de 1 ou plus ;

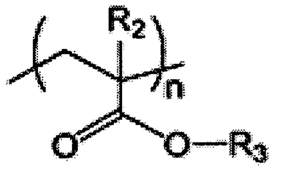

(2)

où, dans la formule 2, $R_2$ est un hydrogène ou un groupe méthyle et $R_3$ est un groupe alkyle linéaire, ramifié ou cyclique ou un groupe alcényle ayant 1 à 8 atomes de carbone qui n'est pas substitué ou est substitué avec un groupe hydroxyle, un groupe alkoxyle, un groupe acétoxyle, un groupe éther cyclique, un groupe amino, un groupe alkoxysilyle ou un atome d'halogène, et où n est un nombre entier de 1 ou plus.

3. Élément optique selon la revendication 1 ou 2, dans lequel la couche de polymère a un indice de réfraction de 1,43 ou plus et de moins de 1,5.

4. Élément optique selon l'une quelconque des revendications 1 à 3, dans lequel :

   quand un indice de réfraction du matériau de base est réglé à nb, un indice de réfraction de la couche de polymère est réglé à ni, et un indice de réfraction de la couche poreuse est réglé à ns, l'élément optique satisfait nb > ni > ns.

5. Élément optique selon l'une quelconque des revendications 1 à 4, dans lequel :

   la couche ayant une structure irrégulière est formée avec un cristal contenant de l'oxyde d'aluminium comme composant principal.

6. Élément optique selon l'une quelconque des revendications 1 à 4, dans lequel la couche poreuse est une couche dans laquelle de fines particules d'oxyde de silicium sont déposées.

7. Procédé de fabrication d'un élément optique dans lequel un corps laminé est formé sur une surface de matériau de base, le procédé comprenant :

   l'application d'une solution de polymère sur le matériau de base ou d'un film mince fourni sur le matériau de base ;
   le séchage et/ou la cuisson de la solution de polymère appliquée pour former une couche de polymère ; et
   la formation d'une couche poreuse ou d'une couche ayant une structure irrégulière sur la couche de polymère ;
   **caractérisé en ce que** :

   la solution de polymère contient un copolymère de maléimide, où le copolymère de maléimide a un rapport de copolymérisation de maléimide de 0,5 ou plus et de 0,97 ou moins ; et
   le séchage et/ou la cuisson est réalisé à 23°C ou plus et 180°C ou moins pour former une couche de polymère contenant le copolymère de maléimide.

8. Procédé de fabrication d'un élément optique selon la revendication 7, dans lequel :

le copolymère de maléimide consiste en un copolymère ayant un motif maléimide représenté par la formule générale (1) suivante et un motif (méth)acrylate représenté par la formule générale (2) suivante :

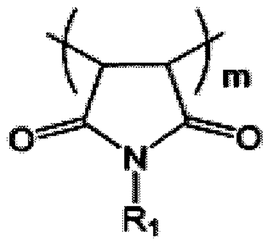

(1)

où, dans la formule 1, $R_1$ est un groupe alkyle linéaire, ramifié ou cyclique ou un groupe alcényle ayant 1 à 8 atomes de carbone qui n'est pas substitué ou est substitué avec un groupe phényle, un groupe hydroxyle, un groupe alkoxyle, un groupe acétoxyle, un groupe éther cyclique, un groupe amino, un groupe alkoxysilyle ou un atome d'halogène, et où m est un nombre entier de 1 ou plus ;

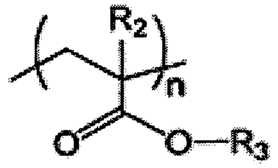

(2)

où, dans la formule 2, $R_2$ est un hydrogène ou un groupe méthyle et $R_3$ est un groupe alkyle linéaire, ramifié ou cyclique ou un groupe alcényle ayant 1 à 8 atomes de carbone qui n'est pas substitué ou est substitué avec un groupe hydroxyle, un groupe alkoxyle, un groupe acétoxyle, un groupe éther cyclique, un groupe amino, un groupe alkoxysilyle ou un atome d'halogène, et où n est un nombre entier de 1 ou plus.

**9.** Procédé de fabrication d'un élément optique selon la revendication 7 ou 8, dans lequel :

la formation de la couche ayant une structure irrégulière comprend :

l'application d'un sol précurseur d'oxyde d'aluminium à 50°C ou plus et 250°C ou moins pour former un film d'oxyde d'aluminium ;
et
l'immersion du film d'oxyde d'aluminium dans de l'eau chaude pour former une couche ayant une structure irrégulière formée avec un cristal contenant de l'oxyde d'aluminium comme composant principal.

**10.** Procédé de fabrication d'un élément optique selon la revendication 7 ou 8, dans lequel :

la formation de la couche poreuse comprend :

l'application d'une solution contenant des particules d'oxyde de silicium ayant un diamètre de particule moyen en nombre de 1 nm ou plus et de 100 nm ou moins pour produire un film dans lequel les fines particules d'oxyde de silicium sont déposées ; et
le séchage et/ou la cuisson du film dans lequel les fines particules d'oxyde de silicium sont déposées à 50°C ou plus et 250°C ou moins pour former une couche poreuse de l'oxyde de silicium.

FIG. 1

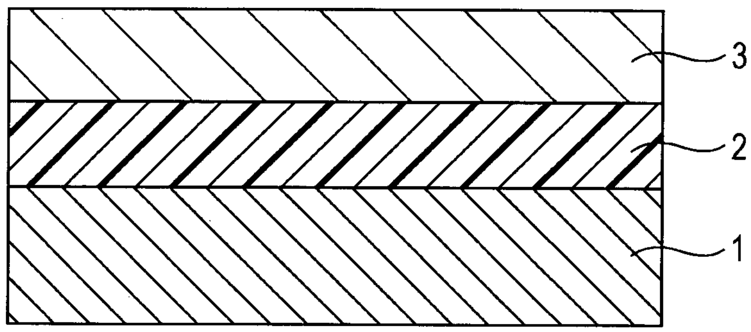


FIG. 2

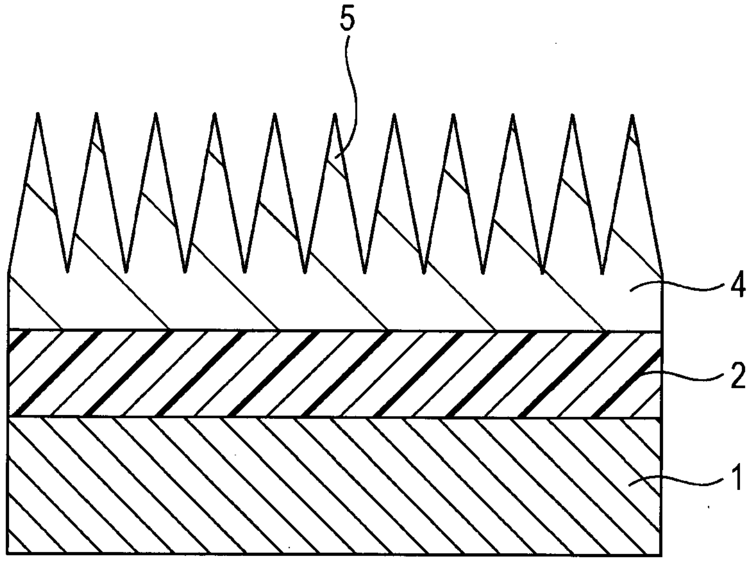

FIG. 3

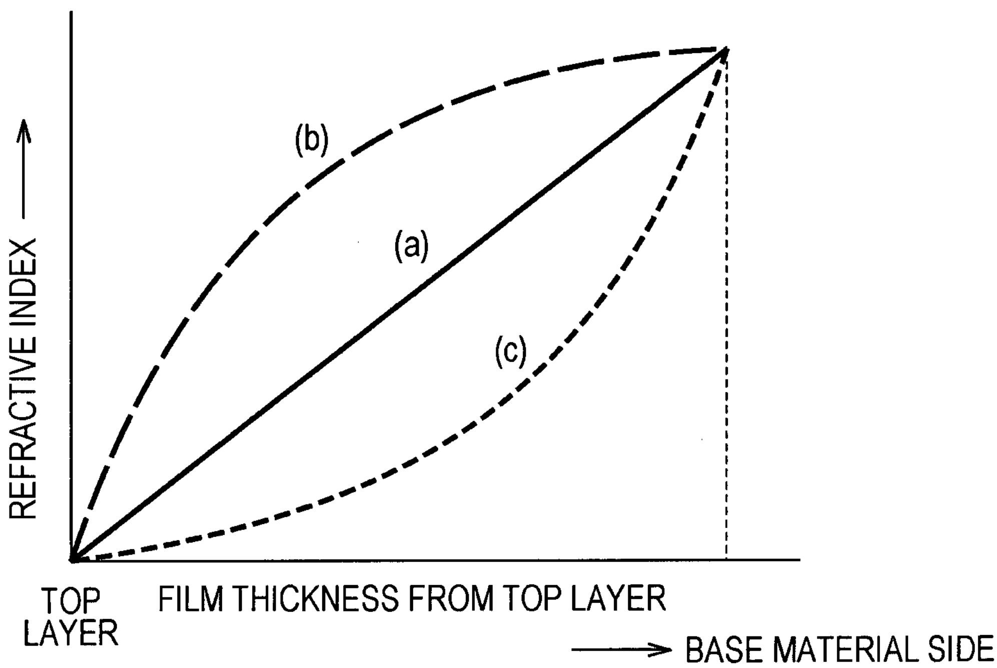
REFRACTIVE INDEX
(a)
(b)
(c)
TOP LAYER
FILM THICKNESS FROM TOP LAYER
BASE MATERIAL SIDE

FIG. 4

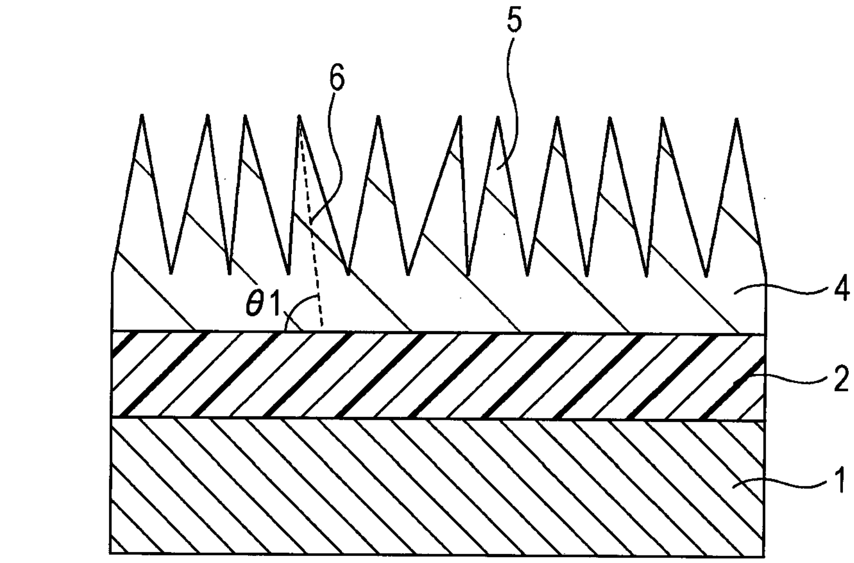


FIG. 5

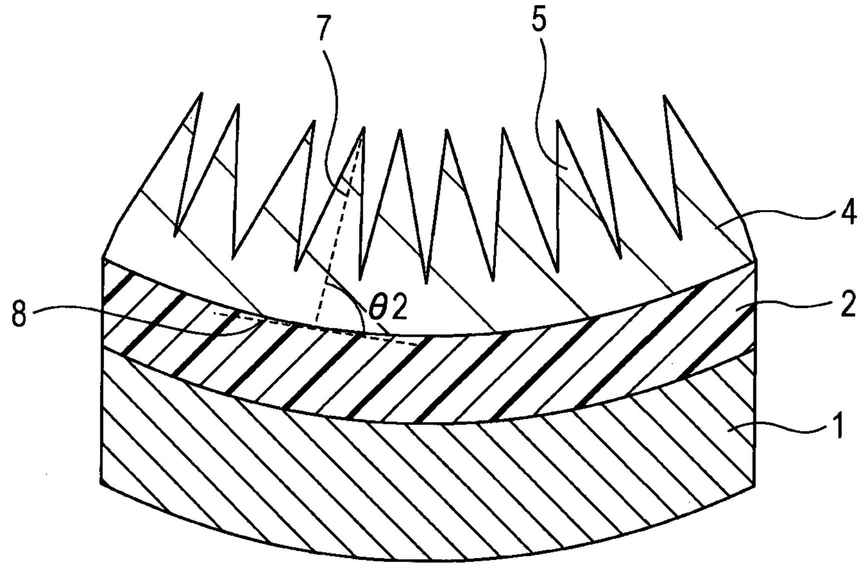

FIG. 6

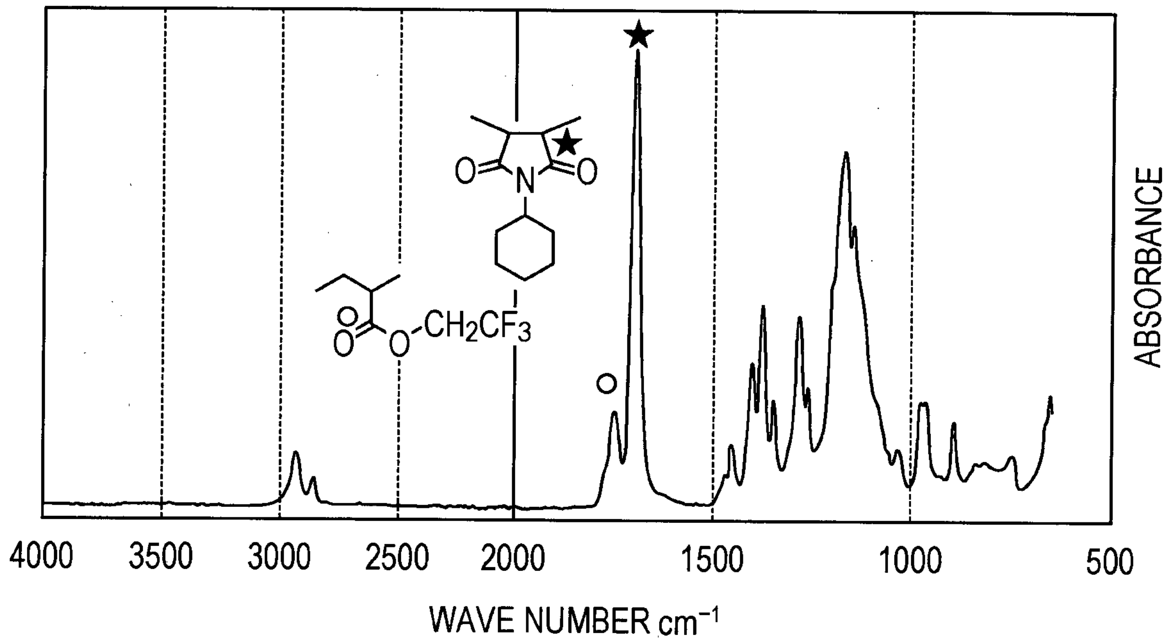
ABSORBANCE
4000
3500
3000
2500
2000
1500
1000
500
WAVE NUMBER cm⁻¹

FIG. 7

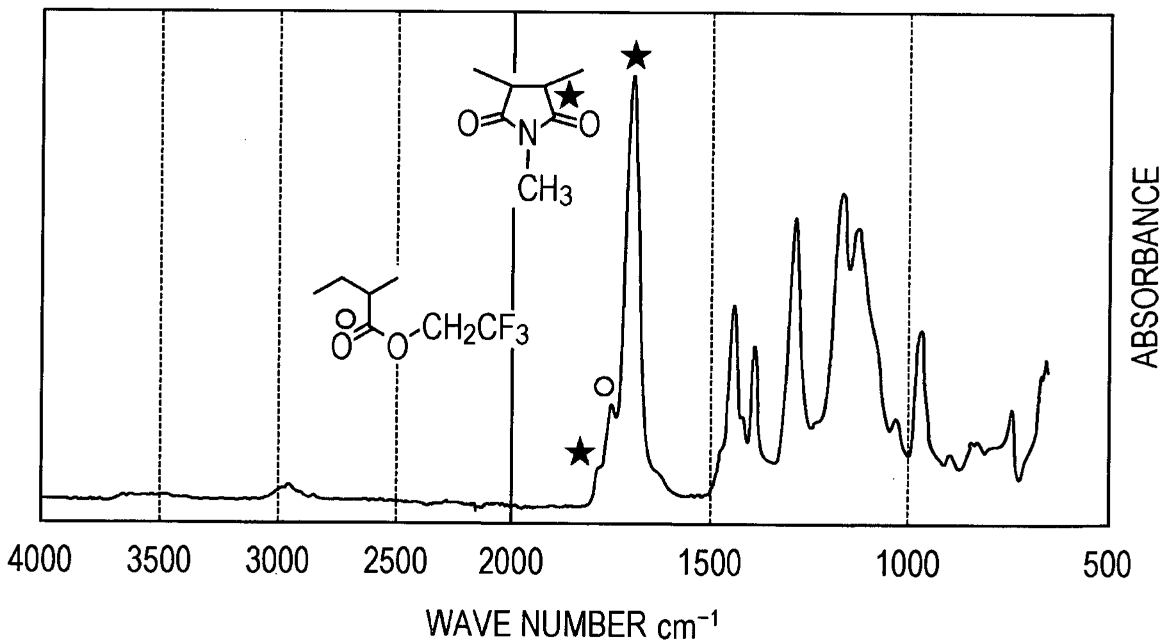
ABSORBANCE
4000
3500
3000
2500
2000
1500
1000
500
WAVE NUMBER cm⁻¹

FIG. 8

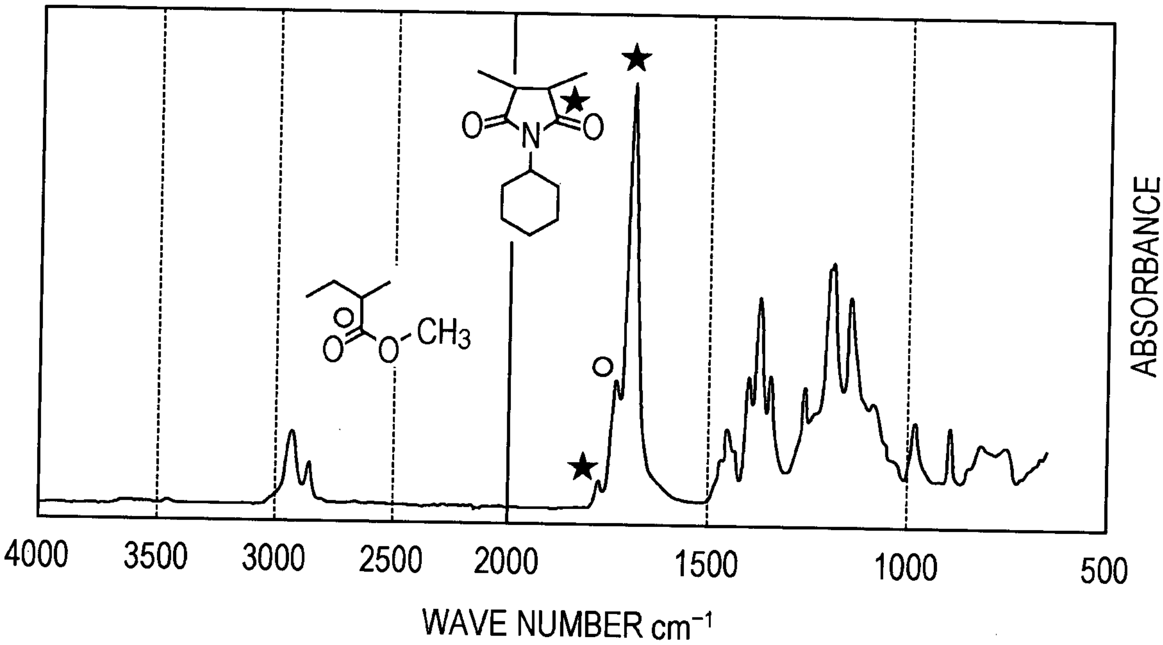
4000
3500
3000
2500
2000
1500
1000
500
WAVE NUMBER cm⁻¹
ABSORBANCE

FIG. 9

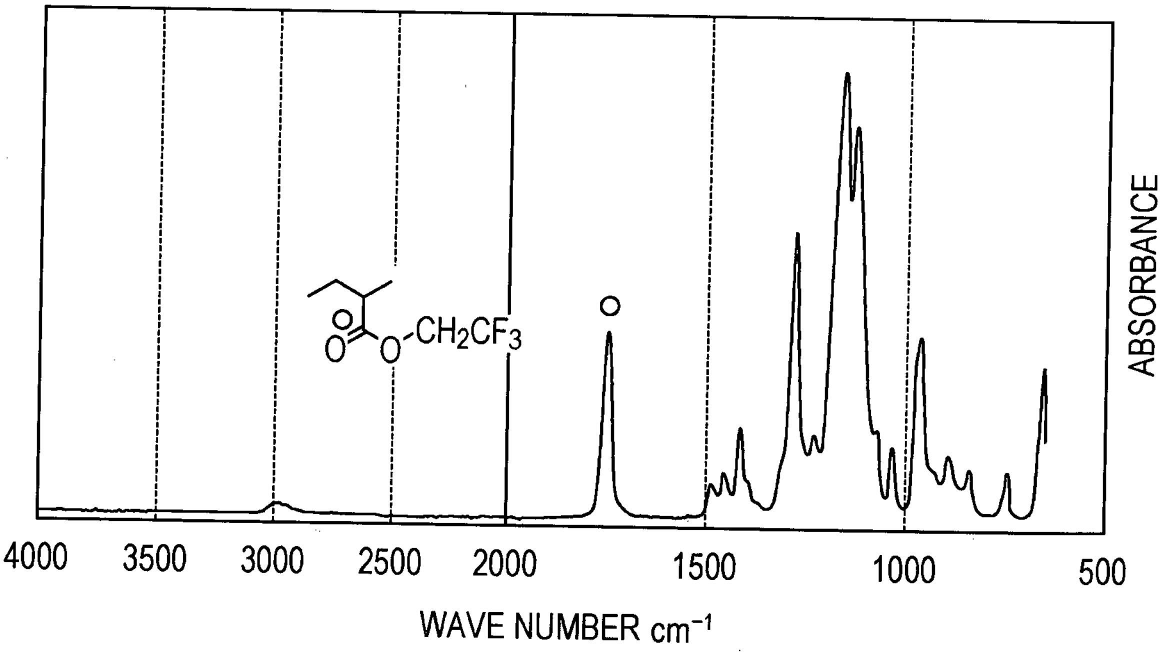
4000
3500
3000
2500
2000
1500
1000
500
WAVE NUMBER cm⁻¹
ABSORBANCE

FIG. 10

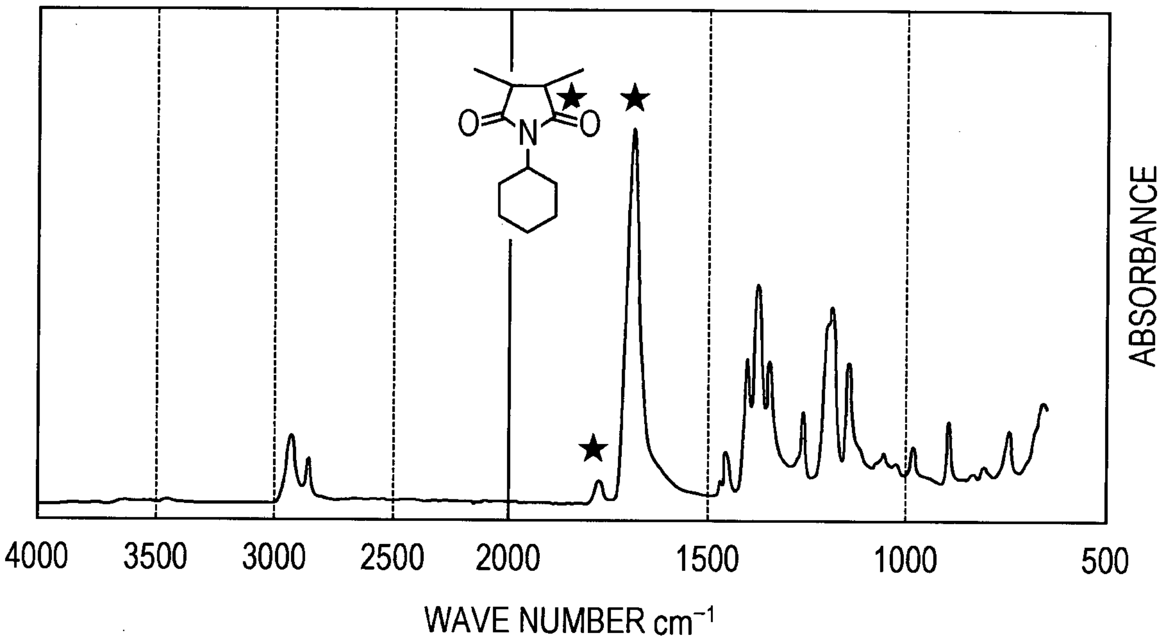
ABSORBANCE
4000
3500
3000
2500
2000
1500
1000
500
WAVE NUMBER cm⁻¹

FIG. 11

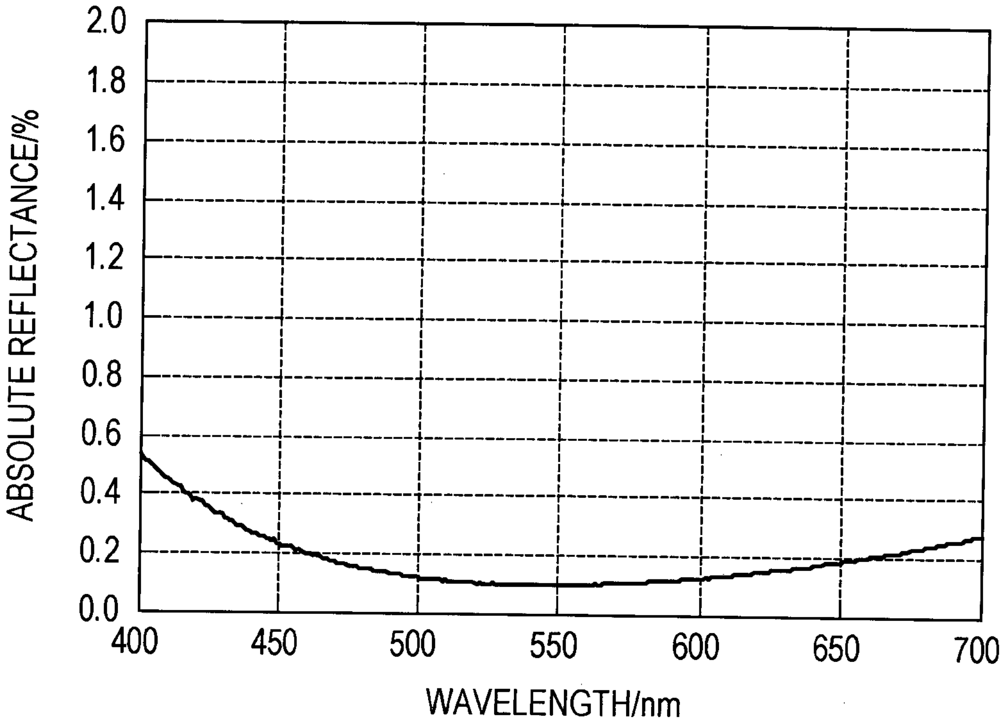
2.0
1.8
1.6
1.4
1.2
1.0
0.8
0.6
0.4
0.2
0.0
ABSOLUTE REFLECTANCE/%
400
450
500
550
600
650
700
WAVELENGTH/nm

FIG. 12

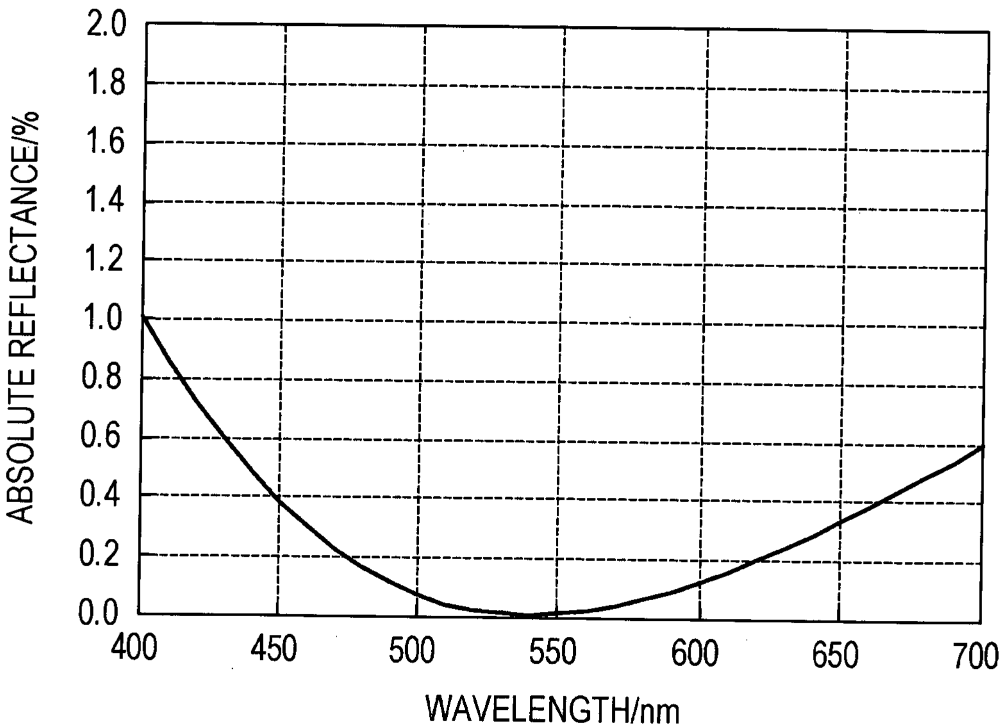
2.0
1.8
1.6
1.4
1.2
1.0
0.8
0.6
0.4
0.2
0.0
ABSOLUTE REFLECTANCE/%
400
450
500
550
600
650
700
WAVELENGTH/nm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008233880 A
- JP 2010256871 A
- JP 2012128168 A


### Non-patent literature cited in the description


- **K. TADANAGA ; N. KATATA ; T. MINAMI.** Super-Water-Repellent Al2O3 Coating Films with High Transparency. *J. Am. Ceram. Soc.,* 1997, vol. 80 (4), 1040-42